# EUROPEAN PATENT APPLICATION

(11) **EP 4 818 774 A1**
(43) Date of publication of application: **07.10.2026**
(21) Application number: 24897707.6
(22) Date of filing: 29.11.2024
(51) Int. Cl.: G02B 6/02, G02B 6/036

(54) **MULTICORE FIBER**

(30) Priority: 29.11.2023 JP 2023201386; 17.01.2024 JP 2024005650
(71) Applicant: Lightera Japan Co., Ltd., Tokyo 100-8322 (JP)
(72) Inventor: MUKASA, Kazunori, Tokyo 100-8322 (JP); FUKUO, Osanobu, Tokyo 100-8322 (JP); STEGMAIER, Matthias Uwe, 2605 Brondby (DK)
(74) Representative: SSM Sandmair
(86) International application number: PCT/JP2024/042388
(87) International publication number: WO 2025/116026

(57) **Abstract**

A multicore fiber includes a plurality of center cores; a plurality of low-refractive-index layers each of which encloses the outer periphery of one of the center cores; and a cladding portion that encloses the plurality of low-refractive-index layers. The maximum refractive index of the center cores is greater than the average refractive index of the cladding portion. The minimum refractive index of the low-refractive-index layers is smaller than the average refractive index of the cladding portion. Among the plurality of center cores, the absolute value of difference in the relative refractive-index differences of the maximum refractive index of the center cores regarding the average refractive index of the cladding portion is equal to or smaller than 10%, and the absolute value of the difference in the center core diameters is equal to or smaller than 10%. For two low-refractive-index layers from among the plurality of low-refractive-index layers, the absolute value of difference in the relative refractive-index differences of the minimum refractive indexes of the two low-refractive-index layers regarding the average refractive index of the cladding portion is equal to or greater than 10%, or the absolute value of the difference in the ratios of the outer diameters regarding the center core diameters is equal to or greater than 10%.

## Description

### Field

The present invention relates to a multicore fiber.

### Background

In a multicore fiber that includes a plurality of cores, as a configuration for making the cores distinguishable in a cross-section, the most common method is to provide a part called a marker in the cladding portion. A marker is a part that has a different refractive index from the refractive index of the cladding portion and that does not contribute in optical propagation. When a cross-section of a multicore fiber is overserved under a microscope, such a marker gets observed as a part having a different contrast than the cladding portion. However, in this method, it becomes necessary to prepare a glass preform for the purpose of forming a marker.

In that regard, methods have been proposed by which, in a multicore fiber, the cores are made distinguishable by arranging them asymmetrically with respect to the central axis of the cladding portion (refer to Patent Literature 1 and Non Patent Literature 1). Moreover, a method has been proposed by which, in order to make the cores distinguishable, stepped cores and trench cores are used as a plurality of cores (refer to Non Patent Literature 2). In the method proposed in Non Patent Literature 2, a plurality of trench cores is configured using cores in which the center cores have mutually different diameters and mutually different refractive indices, thereby making the cores distinguishable.

### Citation List

### Patent Literature

[Patent Literature 1] International Publication Pamphlet No. WO 2022/210786

### Non Patent Literature

[Non Patent Literature 1] Y. Sasaki et al., IEICE EXAT Nov. 2020-13 (2020)
[Non Patent Literature 2] Y. Amma et al., OFC2015, Th4C.4, (2015)

### Summary

### Technical Problem

However, in the methods involving an asymmetrical arrangement as disclosed in Patent Literature 1 and Non Patent Literature 1, it becomes difficult to manufacture optical components that perform optical coupling with the cores, such as optical components called FIFO devices. On the other hand, in the method proposed in Non Patent Literature 2, when there are significant differences in the diameters and the refractive indices of the center cores of a plurality of trench cores, the optical properties of the center cores also become significantly different from each other. In contrast, when there are only minor differences in the diameters and the refractive indices of the center cores, the distinguishability of the center cores undergoes a decline.

The present invention is made in view of the issues explained above, and it is an objective of the present invention to provide a multicore fiber in which not only the differences in the optical properties of the center cores are insignificant, but the center cores are easily distinguishable too.

### Solution to Problem

To solve the above problems and achieve an objective, a multicore fiber according to an aspect of the present invention includes: a plurality of center cores; a plurality of low-refractive-index layers each of which encloses outer periphery of one of the center cores; and a cladding portion that encloses the plurality of low-refractive-index layers, wherein maximum refractive index of the center cores is greater than average refractive index of the cladding portion, minimum refractive index of the low-refractive-index layers is smaller than average refractive index of the cladding portion, among the plurality of center cores, absolute value of difference in relative refractive-index differences of maximum refractive indexes of the center cores with respect to average refractive index of the cladding portion is equal to or smaller than 10%, and absolute value of difference in center core diameters is equal to or smaller than 10%, and regarding two low-refractive-index layers from among the plurality of low-refractive-index layers, absolute value of difference in relative refractive-index differences of minimum refractive indexes of the two low-refractive-index layers with respect to average refractive index of the cladding portion is equal to or greater than 10%, or absolute value of difference in ratios of outer diameters with respect to the center core diameters is equal to or greater than 10%.

Among the plurality of center cores, absolute value of difference in effective core areas may be equal to or smaller than 10%.

The plurality of center cores include a first center core and a second center core, and the plurality of low-refractive-index layers include a first low-refractive-index layer that encloses outer periphery of the first center core, and a second low-refractive-index layer that encloses outer periphery of the second center core, ratio of outer diameter of the second low-refractive-index layer with respect to center core diameter of the second center core is greater by 10% or more than ratio of outer diameter of the first low-refractive-index layer with respect to center core diameter of the first center core, and absolute value of relative refractive-index difference of minimum refractive index of the second low-refractive-index layer with respect to average refractive index of the cladding portion is smaller than absolute value of relative refractive-index difference of minimum refractive index of the first low-refractive-index layer with respect to average refractive index of the cladding portion.

Among the plurality of center cores, absolute value of difference in effective core areas as well as absolute value of difference in cutoff wavelengths may be equal to or smaller than 6%.

A marker that has a different refractive index than refractive index of the cladding portion and that does not contribute in optical propagation may not be present inside the cladding portion.

At least some portion of the low-refractive-index layers may be made of silica glass containing fluorine.

The center core may be made of silica glass containing at least either germanium, or fluorine, or chlorine, or potassium, or sodium.

The center cores propagate light, which is input thereto, in single mode and, at wavelength of the light, may have effective core areas to be equal to or greater than 60 µm² and 180 µm².

A number of the plurality of center cores may be equal to or greater than two and equal to or smaller than 19.

The plurality of center cores may have rotational symmetry with respect to central axis the cladding portion. Advantageous Effects of Invention

According to the present invention, a multicore fiber can be achieved in which not only the differences in the optical properties of the center cores are insignificant, but the center cores are easily distinguishable too.

### Brief Description of Drawings

FIG. 1 is a schematic cross-sectional view of a multicore fiber according to a first embodiment.
FIG. 2A is a diagram of a refractive index profile of the multicore fiber illustrated in FIG. 1.
FIG. 2B is a diagram of a refractive index profile of the multicore fiber illustrated in FIG. 1.
FIG. 3A is a diagram illustrating a photomicrograph of a core in a multicore fiber according to a working example 1.
FIG. 3B is a diagram illustrating a photomicrograph of a core in the multicore fiber according to the working example 1.
FIG. 4 is a schematic cross-sectional view of a multicore fiber according to a second embodiment.
FIG. 5A is a diagram of a refractive index profile of the multicore fiber illustrated in FIG. 3.
FIG. 5B is a diagram of a refractive index profile of the multicore fiber illustrated in FIG. 3.
FIG. 6 is a schematic cross-sectional view of a multicore fiber according to a third embodiment.
FIG. 7A is a diagram of a refractive index profile of the multicore fiber illustrated in FIG. 6.
FIG. 7B is a diagram of a refractive index profile of the multicore fiber illustrated in FIG. 6.
FIG. 8 is a schematic cross-sectional view of a multicore fiber according to a fourth embodiment.
FIG. 9A is a diagram of a refractive index profile of the multicore fiber illustrated in FIG. 8.
FIG. 9B is a diagram of a refractive index profile of the multicore fiber illustrated in FIG. 8.
FIG. 10A is a diagram illustrating an exemplary refractive index profile.
FIG. 10B is a diagram illustrating an exemplary refractive index profile.
FIG. 10C is a diagram illustrating an exemplary refractive index profile.
FIG. 10D is a diagram illustrating an exemplary refractive index profile.
FIG. 11 is a schematic cross-sectional view of a multicore fiber according to a fifth embodiment.
FIG. 12 is a schematic cross-sectional view of a multicore fiber according to a sixth embodiment.
FIG. 13 is a schematic cross-sectional view of a multicore fiber according to a seventh embodiment.
FIG. 14 is a schematic cross-sectional view of a multicore fiber according to an eighth embodiment.
FIG. 15 is a schematic cross-sectional view of a multicore fiber according to a ninth embodiment.
FIG. 16 is a schematic cross-sectional view of a multicore fiber according to a 10-th embodiment.
FIG. 17 is a schematic cross-sectional view of a multicore fiber according to an 11-th embodiment.
FIG. 18 is a schematic cross-sectional view of a multicore fiber according to a 12-th embodiment.
FIG. 19 is a schematic cross-sectional view of a multicore fiber according to a 13-th embodiment.
FIG. 20 is a schematic cross-sectional view of a multicore fiber according to a 14-th embodiment.
FIG. 21 is a schematic cross-sectional view of a multicore fiber according to a working example 1-1.
FIG. 22 is a schematic cross-sectional view of a multicore fiber according to a working example 1-2.
FIG. 23 is a schematic cross-sectional view of a multicore fiber according to a working example 2-1.
FIG. 24 is a schematic cross-sectional view of a multicore fiber according to a working example 2-2.
FIG. 25 is a schematic cross-sectional view of a multicore fiber according to a working example 3-1.
FIG. 26 is a schematic cross-sectional view of a multicore fiber according to a working example 3-2.
FIG. 27 is a diagram illustrating an example of 20 refractive index profiles.

### Description of Embodiments

Exemplary embodiments of the present invention are described below in detail with reference to the accompanying drawings. However, the present invention is not limited by the embodiments described below. In the drawings, identical or corresponding constituent elements are referred to by the same reference numerals, and their explanation is not given repeatedly. Moreover, in the present written description, the cutoff wavelength or the effective cutoff wavelength implies the cable cutoff wavelength (λcc) defined in ITU-T G.650.1 of the International Telecommunications Union (ITU). Regarding the other terms that are not specifically defined in the present written description, it is assumed that the definitions and the measurement methods given in G.650.1 and G.650.2 are followed.

### (First embodiment)

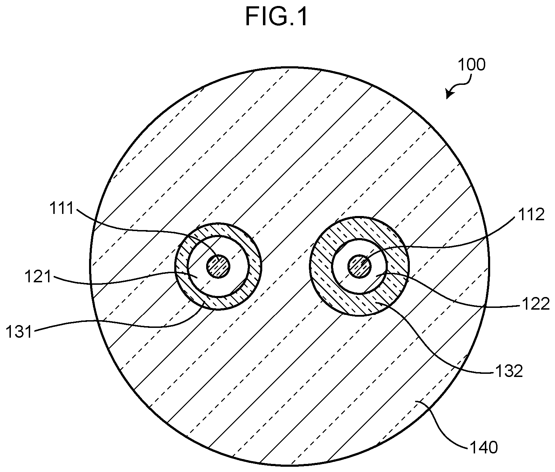

FIG. 1 is a schematic cross-sectional view of a multicore fiber according to a first embodiment. A multicore fiber 100 is made of silica glass and includes center cores 111 and 112, intermediate layers 121 and 122, trench layers 131 and 132, and a cladding portion 140. The center cores 111 and 112 represent an example of a plurality of center cores, and the trench layers 131 and 132 represent an example of a plurality of low-refractive-index layers.

In the present written description, the portion including a center core, an intermediate layer, and a trench layer is sometimes referred to as the core.

The center cores 111 and 112 have a substantially circular cross-section, and are disposed to have two-fold rotational symmetry with respect to the central axis of the cladding portion 140 that also has a substantially circular cross-section. The maximum refractive index of the center core 111 is higher than the average refractive index of the cladding portion 140. Herein, the average refractive index of the cladding portion 140 implies the average refractive index in a radial direction of the cladding portion 140. Moreover, the maximum refractive index of the center core 112 too is higher than the average refractive index of the cladding portion 140. The center cores 111 and 112 can contain at least either germanium, or fluorine, or chlorine, or potassium, or sodium.

The intermediate layer 121 has a substantially ring-shaped cross-section and encloses the outer periphery of the center core 111. The intermediate layer 122 has a substantially ring-shaped cross-section and encloses the outer periphery of the center core 112. The average refractive index of the intermediate layer 121 is lower than the maximum refractive index of the center core 111, and is substantially equal to the average refractive index of the cladding portion 140. The average refractive index of the intermediate layer 122 is lower than the maximum refractive index of the center core 112, and is substantially equal to the average refractive index of the cladding portion 140. The average refractive indices of the intermediate layers 121 and 122 imply the average refractive indices in a radial direction of the intermediate layers 121 and 122. At least some part of the intermediate layers 121 and 122 can be made of silica glass containing fluorine, or can be made of pure silica glass. Herein, pure silica glass implies silica glass that has extremely high purity, that practically does not contain a dopant meant for varying the refractive index, and that has the refractive index of about 1.444 at the wavelength of 1550 nm.

The trench layer 131 has a substantially ring-shaped cross-section and encloses the outer periphery of the center core 111 and the intermediate layer 121. The trench layer 132 has a substantially ring-shape cross-section and encloses the outer periphery of the center core 112 and the intermediate layer 122. The minimum refractive index of the trench layer 131 is lower than the average refractive index in a radial direction of the cladding portion 140. The minimum refractive index of the trench layer 132 is lower than the average refractive index in a radial direction of the cladding portion 140. At least some part of the trench layers 131 and 132 can be made of silica glass containing fluorine.

The cladding portion 140 encloses the outer periphery of the trench layers 131 and 132. At least some part of the cladding portion 140 can be made of silica glass containing fluorine, or can be made of pure silica glass.

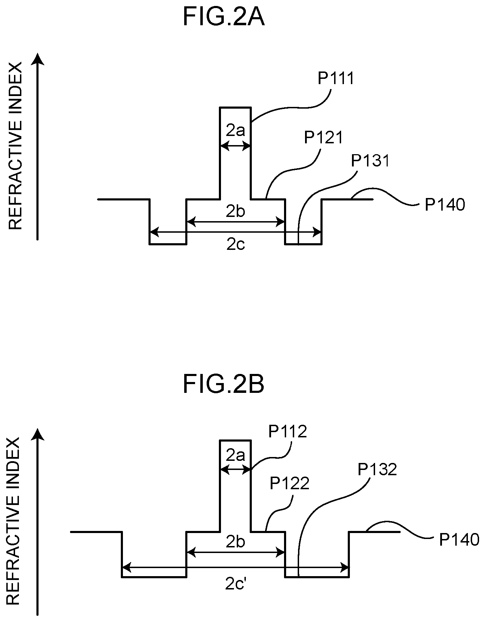

FIGS. 2A and 2B are diagrams of the refractive index profiles of the multicore fiber 100. In FIG. 2A is illustrated the refractive index profiles of the center core 111, the intermediate layer 121, the trench layer 131 and the cladding portion 140. More particularly, a profile P111 represents the refractive index profile of the center core 111; a profile P121 represents the refractive index profile of the intermediate layer 121; a profile P131 represents the refractive index profile of the trench layer 131; and a profile P140 represents the refractive index profile of the cladding portion 140. In an identical manner, with reference to FIG. 2B, a profile P112 represents the refractive index profile of the center core 112; a profile P122 represents the refractive index profile of the intermediate layer 122; a profile P132 represents the refractive index profile of the trench layer 132; and the profile P140 represents the refractive index profile of the cladding portion 140. As illustrated in FIGS. 2A and 2B, the multicore fiber 100 has trench-type refractive index profiles.

Moreover, as illustrated in FIGS. 2A and 2B, the center cores 111 and 112 have an identical diameter (center core diameter) 2a. The intermediate layers 121 and 122 have an identical outer diameter 2b. The trench layer 131 has an outer diameter 2c, and the trench layer 132 has an outer diameter 2c' that is different from the outer diameter 2c. Herein, the difference in the ratios of the outer diameters with respect to the center core diameters, that is, the difference between (c'/a) and (c/a) has the absolute value to be 10% or more of the smaller value between (c/a) and (c'/a).

When Δ1 represents the relative refractive-index difference of the maximum refractive index of the center core 111 with respect to the average refractive index of the cladding portion 140, and when Δ1' represents the relative refractive-index difference of the maximum refractive index of the center core 112 with respect to the average refractive index of the cladding portion 140; the relative refractive-index differences Δ1 and Δ1' are equal. Moreover, the relative refractive-index difference of the minimum refractive index of the trench layer 131 with respect to the average refractive index of the cladding portion 140 is equal to the relative refractive-index difference of the minimum refractive index of the trench layer 132 with respect to the average refractive index of the cladding portion 140. In the following explanation, the relative refractive-index differences Δ1 and Δ1' are sometimes collectively referred to as the center core Δ. Moreover, the relative refractive-index difference of the minimum refractive index of a trench layer with respect to the average refractive index of the cladding portion is sometimes referred to as the trench Δ.

In the multicore fiber 100 configured in the manner explained above, between the center cores 111 and 112, the absolute value of the difference in the center core Δ and the absolute value of the difference in the center core diameters 2a are 10% or less of the center core Δ and the center core diameter 2a, respectively, and more particularly are equal to 0%. Moreover, between the trench layers 131 and 132, the difference between (c'/a) and (c/a) has the absolute value to be 10% or more of the smaller value of (c/a) and (c'/a) . As a result, in the multicore fiber 100, the optical properties of the center cores 111 and 112 get roughly determined by the center core Δ and the center core diameter 2a, and hence there is not much difference in their optical properties. Moreover, since the difference between (c'/a) and (c/a) has the absolute value to be 10% or more of the smaller value of (c/a) and (c'/a), when the cross-sectional surface of the multicore fiber 100 is observed under a microscope, the trench layers 131 and 132 are easily distinguishable from each other. As a result, the center cores 111 and 112 are also easily distinguishable from each other. Particularly, in the multicore fiber 100, the cladding portion 140 is no longer required to include a marker that has a different refractive index from the refractive index of the cladding portion 140 and that does not contribute in optical propagation; and the center cores 111 and 112 are no longer required to be asymmetrically arranged for not having rotational symmetry with respect to the central axis of the cladding portion 140.

Meanwhile, the multicore fiber according to the first embodiment can be manufactured according to a known glass preform manufacturing method such as the VAD (Vapor phase Axial Deposition) method or the MCVD (Modified Chemical Vapor Deposition) method; a known boring method used for multicore fiber manufacturing; and a known fiber drawing method.

As a working example 1, the present inventors manufactured a multicore fiber as illustrated in FIG. 1. In the working example 1, regarding a core #1 (equivalent to the core including the center core 111 illustrated in FIG. 1), the structural parameters are as follows. The center core Δ is equal to 0.27% and the trench Δ is equal to -0.3%. Moreover, the average refractive index of the intermediate layer is same as the average refractive index of the cladding portion. Furthermore, the center core diameter 2a is equal to 11.0 µm. Furthermore, (b/a) is equal to 2.5, and (c/a) is equal to 3.0. Regarding a core #2 (equivalent to the core including the center core 112 illustrated in FIG. 1), the structural parameters are same as the structural parameters for the core #1, except for the fact that (c'/a) is equal to 4.5. In that case, the difference in (c/a) and (c'/a) has the absolute value to be equal to 50% of (c/a).

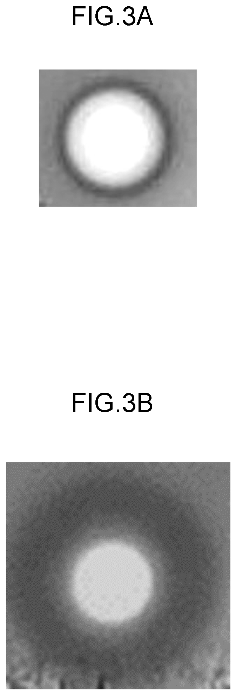

FIGS. 3A and 3B are diagrams illustrating photomicrographs of the cores in the multicore fiber according to the working example 1. In FIG. 3A is illustrated a photograph of the core #1, and in FIG. 3B is illustrated a photograph of the core #2. As is clear from FIGS. 3A and 3B, it was extremely easy to distinguish the cores #1 and #2 from each other.

The present inventors also manufactured multicore fibers that were identical to the multicore fiber according to the working example 1, but in which the absolute value of the difference between (c/a) and (c'/a) was equal to 0%, 10%, 20%, and 30% of (c/a), respectively. When those multicore fibers were observed under a microscope, in the cases in which the absolute value of the difference between (c/a) and (c'/a) was equal to 10%, 20%, and 30% of (c/a), the cores were confirmed to be distinguishable from each other.

### (Second embodiment)

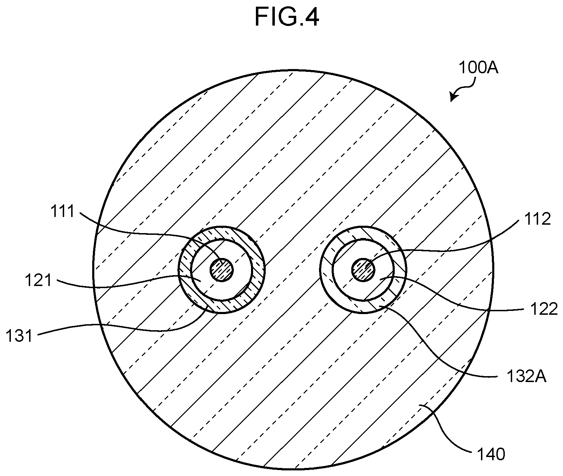

FIG. 4 is a schematic cross-sectional view of a multicore fiber according to a second embodiment. A multicore fiber 100A is configured by substituting a trench layer 132A for the trench layer 132 of the multicore fiber 100 illustrated in FIG. 1.

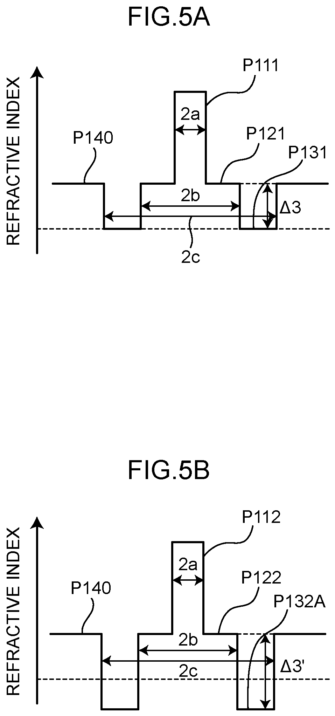

FIGS. 5A and 5B illustrate the refractive index profiles of the multicore fiber 100A. In FIG. 5A is illustrated the refractive index profile of the center core 111, the intermediate layer 121, the trench layer 131 and the cladding portion 140, and is same as the refractive index profile illustrated in FIG. 2A. With reference to FIG. 5B, the profile P112 represents the refractive index profile of the center core 112; the profile P122 represents the refractive index profile of the intermediate layer 122; a profile P132A represents the refractive index profile of the trench layer 132A; and the profile P140 represents the refractive index profile of the cladding portion 140.

In the multicore fiber 100A, the trench layers 131 and 132A have an identical outer diameter 2c. When Δ3 represents the relative refractive-index difference of the minimum refractive index of the trench layer 131 with respect to the average refractive index of the cladding portion 140, and when Δ3' represents the relative refractive-index difference of the minimum refractive index of the trench layer 132A with respect to the average refractive index of the cladding portion 140; the relative refractive-index difference Δ3 is different from the relative refractive-index difference Δ3', and the absolute value of the difference therebetween is 10% or more of Δ3 or Δ3'.

In the multicore fiber 100A configured in the manner explained above, between the center cores 111 and 112, the absolute value of the difference in the center core Δ and the absolute value of the difference in the center core diameters 2a are 10% or less of the center core Δ and the center core diameter 2a, respectively, and more particularly are equal to 0%. Moreover, between the trench layers 131 and 132, the difference between Δ3 and Δ3' has the absolute value of 10% or more of the smaller value of Δ3 and Δ3'. As a result, in the multicore fiber 100A, in an identical manner to the multicore fiber 100, there is not much difference in the optical properties of the center cores 111 and 112. Moreover, since the difference between Δ3 and Δ3' has the absolute value of 10% or more of the smaller value of Δ3 and Δ3', when the cross-sectional surface of the multicore fiber 100A is observed under a microscope, the trench layers 131 and 132 are easily distinguishable from each other. As a result, the center cores 111 and 112 are also easily distinguishable from each other, and there is also no need to provide a marker or have an asymmetrical arrangement. Herein, the difference in the trench Δ between the trench layers 131 and 132 is observed as the difference in the contrasts.

The present inventors manufactured multicore fibers that were identical to the multicore fiber according to the second embodiment, but in which the absolute value of the difference between Δ3 and Δ3' was equal to 0%, 10%, 20%, and 30% of Δ3, respectively. When those multicore fibers were observed under a microscope, in the cases in which the absolute value of the difference between Δ3 and Δ3' was equal to 10%, 20%, and 30% of Δ3, the cores were confirmed to be distinguishable from each other.

### (Third embodiment)

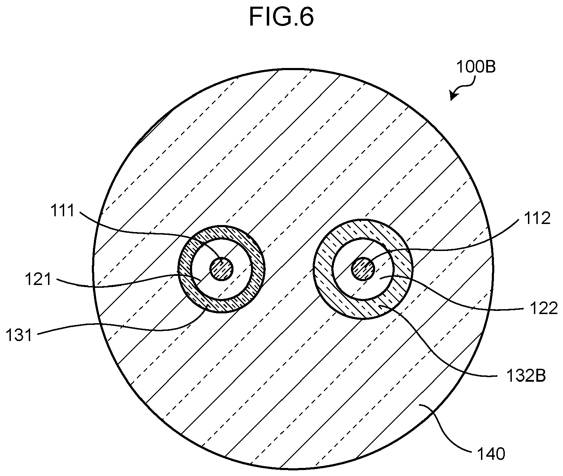

FIG. 6 is a schematic cross-sectional view of a multicore fiber according to a third embodiment. A multicore fiber 100B is configured by substituting a trench layer 132B for the trench layer 132 of the multicore fiber 100 illustrated in FIG. 1.

The center core 111 represents an example of a first center core. The center core 112 represents an example of a second center core. The trench layer 131 represents an example of a first low-refractive-index layer. The trench layer 131B represents an example of a second low-refractive-index layer.

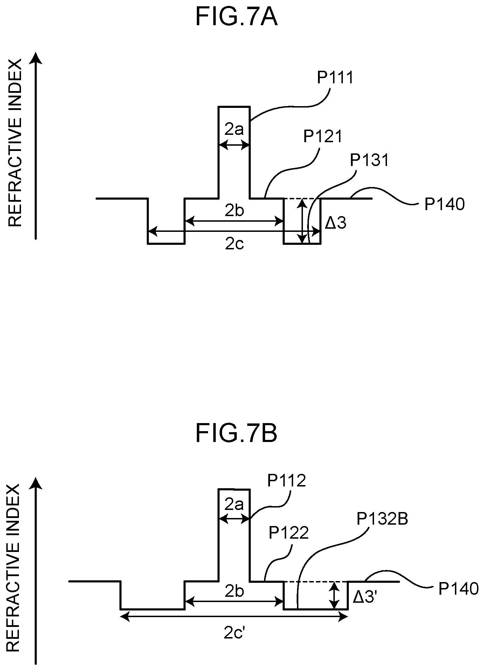

FIGS. 7A and 7B are diagrams of the refractive index profiles of the multicore fiber 100B. In FIG. 7A is illustrated the refractive index profile of the center core 111, the intermediate layer 121, the trench layer 131 and the cladding portion 140, and is same as the refractive index profile illustrated in FIG. 2A. With reference to FIG. 7B, the profile P112 represents the refractive index profile of the center core 112; the profile P122 represents the refractive index profile of the intermediate layer 122; a profile P132B represents the refractive index profile of the trench layer 132B; and the profile P140 represents the refractive index profile of the cladding portion 140.

As illustrated in FIGS. 7A and 7B, the trench layer 131 has the outer diameter 2c, and the trench layer 131B has the outer diameter 2c' that is different from the outer diameter 2c. More particularly, the outer diameter 2c' is greater than the outer diameter 2c. Herein, the difference in the ratios of the outer diameters with respect to the center core diameters, that is, the difference between (c'/a) and (c/a) has the absolute value of 10% or more of the smaller value out of (c/a) and (c'/a). The ratio (c'/a) represents an example of the ratio of the outer diameter of the second low-refractive-index layer with respect to the center core diameter of the second center core; and the ratio (c/a) represents an example of the ratio of the outer diameter of the first low-refractive-index layer with respect to the center core diameter of the first center core.

When Δ3 represents the relative refractive-index difference of the minimum refractive index of the trench layer 131 with respect to the average refractive index of the cladding portion 140, and when Δ3' represents the relative refractive-index difference of the minimum refractive index of the trench layer 132 with respect to the average refractive index of the cladding portion 140; the relative refractive-index difference Δ3 is different from the relative refractive-index difference Δ3'. More particularly, the absolute value of the relative refractive-index difference Δ3' is smaller than the absolute value of the relative refractive-index difference Δ3. Herein, Δ3 represents an example of the relative refractive-index difference of the minimum refractive index of the first low-refractive-index layer with respect to the average refractive index of the cladding portion. Moreover, Δ3' represents an example of the relative refractive-index difference of the minimum refractive index of the second low-refractive-index layer with respect to the average refractive index of the cladding portion.

In the multicore fiber 100B configured in the manner explained above, between the center cores 111 and 112, the absolute value of the difference in the center cores Δ and the absolute value of the difference in the center core diameters 2a are 10% or less of the center core Δ and the center core diameter 2a, respectively, and more particularly are equal to 0%. As a result, in the multicore fiber 100, the optical properties of the center cores 111 and 112 get roughly determined by the center core Δ and the center core diameter 2a, and hence there is not much difference in their optical properties. Herein, examples of the optical properties having not much difference include the effective core area and the chromatic dispersion.

Moreover, since the difference between (c'/a) and (c/a) has the absolute value of 10% or more of the smaller value of (c/a) and (c'/a), when the cross-sectional surface of the multicore fiber 100 is observed under a microscope, the trench layers 131 and 132 are easily distinguishable from each other. As a result, the center cores 111 and 112 are also easily distinguishable from each other. Particularly, in the multicore fiber 100, the cladding portion 140 is no longer required to include a marker that has a different refractive index from the refractive index of the cladding portion 140 and that does not contribute in optical propagation; and the center cores 111 and 112 are no longer required to be asymmetrically arranged for not having rotational symmetry with respect to the central axis of the cladding portion 140.

Generally, regarding a low-refractive-index layer such as a trench layer, greater the thickness or lower the refractive index, the greater is the effect of the low-refractive-index layer in shifting the cutoff wavelength more toward the long-wavelength side. In the multicore fiber 100B, since (c'/a) of the trench layer 132B is greater than (c/a) of the trench layer 131, in terms of the thickness, the trench layer 132B has the effect of shifting the cutoff wavelength of the center core 112 more toward the long-wavelength side. However, in the multicore fiber 100, the absolute value of Δ3 is greater than the absolute value of Δ3'. Hence, in terms of the refractive index, the trench layer 131 has the effect of shifting the cutoff wavelength of the center core 111 more toward the long-wavelength side. As a result, the effect of a shift in the cutoff wavelength attributed to the thickness offsets the effect of a shift in the cutoff wavelength attributed to the refractive index, thereby resulting in the narrowing of the difference between the cutoff wavelengths of the center cores 111 and 112.

The cutoff wavelength is equivalent to the lower limit value of the wavelengths that enable single-mode propagation of light in an optical fiber. Hence, from the management point of view or the practical point of view regarding a plurality of cores, it is desirable that there is not much difference in the cutoff wavelengths of the cores. Particularly, at the time of managing the operating wavelength band or changing the expansion, it is desirable that there is not much difference in the cutoff wavelengths. For example, it is desirable that the difference in the cutoff wavelengths of the center cores is equal to or smaller than 6% of the smaller cutoff wavelength.

Regarding the behavior of the cutoff wavelengths of the two center cores depending on the low-refractive-index layers, specific explanation is given with reference to the result of simulated calculation. Herein, Table 1 is a table for indicating the optical properties in the case in which, in a multicore fiber including two cores as explained in the third embodiment, one core is set to have the structure parameters corresponding to No. 1, and the other core is set to have the structure parameters corresponding to one of No. 2-1 to No. 2-7. With reference to Table 1, "MFD" implies the mode field diameter, and "macro-bending loss" implies the macro-bending loss incurred when winding is done at the diameter of 20 mm. Moreover, in Table 1, regarding zero-dispersion wavelength, dispersion slope, MFD, λcc, and macro-bending loss; the numerical values according to the ITU-T G.657.A1 standard are also mentioned.

**Table 1**

| No. | Center core Δ | Trench Δ | b/a | c/a | Center core diameter 2a | Zero-dispersion wavelength | Dispersion slope | MFD | λcc | Macro-bending loss |
|---|---|---|---|---|---|---|---|---|---|---|
| | [%] | [%] | | | [µm] | [nm] | [ps/nm²/km] @ zero-dispersion wavelength | [µm] @ 1310 nm | [nm] @ 22 m | [dB/m @ 20 mm φ] @ 1550 nm |
| ITU-T G.657.A1 standard | | | | | | 1300-1324 | ≤0.092 | 8.6-9.2 | ≤1260 | ≤11.9 |
| 1 | 0.37 | -0.2 | 3 | 4 | 7.9 | 1320 | 0.086 | 8.72 | 1180 | 4.0 |
| 2-1 | 0.37 | -0.2 | 3 | 5 | 7.9 | 1319 | 0.086 | 8.72 | 1253 | 0.9 |
| 2-2 | 0.37 | -0.18 | 3 | 5 | 7.9 | 1319 | 0.086 | 8.72 | 1240 | 1.3 |
| 2-3 | 0.37 | -0.16 | 3 | 5 | 7.9 | 1319 | 0.086 | 8.73 | 1228 | 1.5 |
| 2-4 | 0.37 | -0.14 | 3 | 5 | 7.9 | 1319 | 0.086 | 8.73 | 1214 | 2.0 |
| 2-5 | 0.37 | -0.12 | 3 | 5 | 7.9 | 1320 | 0.086 | 8.73 | 1206 | 2.9 |
| 2-6 | 0.37 | -0.1 | 3 | 5 | 7.9 | 1320 | 0.086 | 8.73 | 1196 | 3.7 |
| 2-7 | 0.37 | -0.08 | 3 | 5 | 7.9 | 1320 | 0.086 | 8.73 | 1183 | 4.3 |

With reference to Table 1, the core of No. 1 and the core of No. 2-1 have the same trench Δ. However, the ratio (c/a) for the core of No. 2-1 is equal to or greater than the ratio (c/a) for the core of No. 1 by 10% or more, and more particularly is greater by 25%. Thus, the respective cutoff wavelengths of 1180 nm and 1253 nm indicate that the core corresponding to No. 2-1 has the greater cutoff wavelength by 73 nm (which is greater than the smaller cutoff wavelength of 1180 nm by about 6.2.%). In contrast, regarding the core of No. 1 and the core of No. 2-2, the ratio (c/a) for the core of No. 2-2 is greater than the ratio (c/a) for the core of No. 1 by 25%. However, the absolute value of the trench Δ for the core of No. 2-2 is smaller than the absolute value of the trench Δ for the core of No. 1 by 0.02%. Thus, the respective cutoff wavelengths are equal to 1180 nm and 1240 nm. In that case, the difference in the cutoff wavelengths of the two cores is equal to 60 nm, which is smaller than the difference in the cutoff wavelength of the core of No. 1 and the cutoff wavelength of the core of No. 2-1. In an identical manner, regarding the core of No. 1 and the core of No. 2-7, the ratio (c/a) for the core of No. 2-7 is greater than the ratio (c/a) for the core of No. 1 by 25%. However, the absolute value of the trench Δ for the core of No. 2-7 is smaller than the absolute value of the trench Δ for the core of No. 1 by 0.12%. Thus, the respective cutoff wavelengths are equal to 1180 nm and 1183 nm. In that case, the difference in the cutoff wavelengths of the two cores is equal to only 3 nm.

Meanwhile, with reference to Table 1, regarding the macro-bending loss too, it can be seen that the difference in the macro-bending loss of the core of No. 1 and the macro-bending loss of any one of the cores from among the core of No. 2-2 to the core of No. 2-7 is smaller than the concerned difference between the core of No. 1 and the core of No. 2-1.

Moreover, with reference to Table 1, regarding the zero-dispersion wavelength, the dispersion slope, and the MFD, it can be seen that there is almost no difference between the core of No. 1 and any one core from among the core of No. 2-2 to the core of No. 2-7. Furthermore, regarding the zero-dispersion wavelength, the dispersion slope, the MFD, the λcc, and the macro-bending loss, it can be seen that the core of No. 1 and all cores from among the core of No. 2-2 to the core of No. 2-7 satisfy the ITU-T G.657.A1 standard.

As explained above, in the multicore fiber 100B according to the third embodiment, not only the difference in the optical properties of the center cores 111 and 112 (including the cutoff wavelength and the macro-bending loss) is insignificant, but the center cores 111 and 112 are easily distinguishable too.

### (Fourth embodiment)

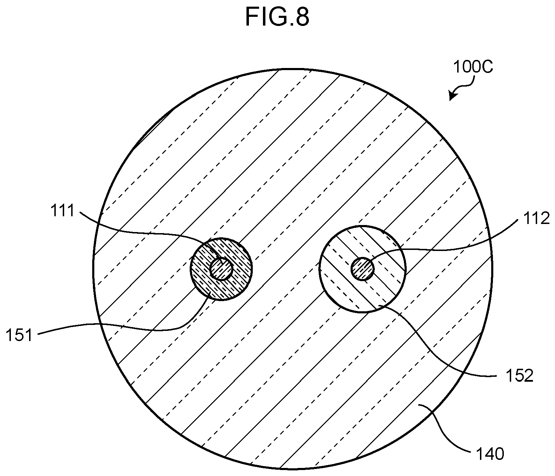

FIG. 8 is a schematic cross-sectional view of a multicore fiber according to a fourth embodiment. A multicore fiber 100C is configured by substituting a depressed layer 151 for the intermediate layer 121 and the trench layer 131 of the multicore fiber 100B illustrated in FIG. 6, and by substituting a depressed layer 152 for the intermediate layer 122 and the trench layer 132B of the multicore fiber 100B illustrated in FIG. 6.

The depressed layer 151 has a substantially ring-shaped cross-section and encloses the outer periphery of the center core 111. The depressed layer 152 has a substantially ring-shaped cross-section and encloses the outer periphery of the center core 112. The average refractive index in a radial direction of the depressed layer 151 is lower than the average refractive index in a radial direction of the cladding portion 140. The average refractive index in a radial direction of the depressed layer 152 is lower than the average refractive index in a radial direction of the cladding portion 140. At least some part of the depressed layers 151 and 152 can be made of silica glass containing fluorine.

The depressed layers 151 and 152 represent examples of a plurality of low-refractive-index layers. The depressed layer 151 represents an example of the first low-refractive-index layer from among the plurality of low-refractive-index layers. The depressed layer 152 represents an example of the second low-refractive-index layer from among the plurality of low-refractive-index layers.

In the present written description, the portion including a center core and a depressed layer is sometimes referred to as the core.

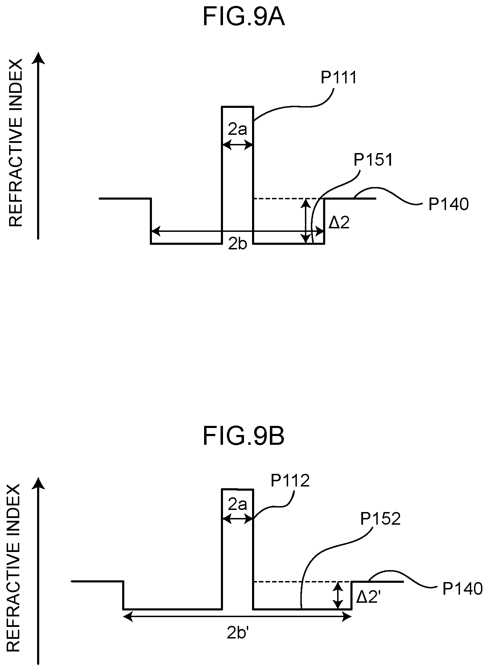

FIGS. 9A and 9B are diagrams of the refractive index profiles of the multicore fiber 100C. In FIG. 9A is illustrated the refractive index profile of the center core 111, the depressed layer 151, and the cladding portion 140. More particularly, a profile P151 represents the refractive index profile of the depressed layer 151. In an identical manner, in FIG. 9B is illustrated the refractive index profile of the center core 112, the depressed layer 152, and the cladding portion 140. More particularly, a profile P152 represents the refractive index profile of the depressed layer 152. As illustrated in FIGS. 9A and 9B, the multicore fiber 100C has W-shaped refractive index profiles.

Moreover, as illustrated in FIGS. 9A and 9B, the depressed layer 151 has the outer diameter 2b, and the depressed layer 152 has an outer diameter 2b' that is different than the outer diameter 2b. More particularly, the outer diameter 2b' is greater than the outer diameter 2b. Herein, the difference in the ratios of the outer diameters with respect to the center core diameters, that is, the difference between (b'/a) and (b/a) has the absolute value of 10% or more of the smaller value of (b/a) and (b'/a). Herein, (b'/a) represents an example of the ratio of the outer diameter of the second low-refractive-index layer with respect to the center core diameter of the second center core; and (b/a) represents an example of the ratio of the outer diameter of the first low-refractive-index layer with respect to the center core diameter of the first center core.

When Δ2 represents the relative refractive-index difference of the minimum refractive index of the depressed layer 151 with respect to the average refractive index of the cladding portion 140, and when Δ2' represents the relative refractive-index difference of the minimum refractive index of the depressed layer 152 with respect to the average refractive index of the cladding portion 140; the relative refractive-index difference Δ2 is different from the relative refractive-index difference Δ2', and more particularly the absolute value of the relative refractive-index difference Δ2' is smaller than the absolute value of the relative refractive-index difference Δ2. Herein, Δ2 represents an example of the absolute value of the relative refractive-index difference of the minimum refractive index of the first low refractive-index layer with respect to the average refractive index of the cladding portion. Moreover, Δ2' represents an example of the absolute value of the relative refractive-index difference of the minimum refractive index of the second low refractive-index layer with respect to the average refractive index of the cladding portion.

In the following explanation, the relative refractive-index difference of the minimum refractive index of a depressed layer with respect to the average refractive index of the cladding portion, such as Δ2 or Δ2', is sometimes referred to as the depressed Δ.

In the multicore fiber 100C configured in the manner explained above, in an identical manner to the multicore fiber 100B according to the third embodiment, there is not much difference in the optical properties of the center cores 111 and 112. Herein, examples of the optical properties having not much difference include the effective core area and the chromatic dispersion.

Moreover, since the difference between (b'/a) and (b/a) has the absolute value of 10% or more of the smaller value of (b/a) and (b'/a), when the cross-sectional surface of the multicore fiber 100A is observed under a microscope, the depressed layers 151 and 152 are easily distinguishable from each other. As a result, the center cores 111 and 112 are also easily distinguishable from each other. In the multicore fiber 100A, the cladding portion 140 is no longer required to include a marker, and the center cores 111 and 112 are no longer required to be asymmetrically arranged.

In the multicore fiber 100C too, between the depressed layers 151 and 152, the effect of a shift in the cutoff wavelength attributed to the thickness offsets the effect of a shift in the cutoff wavelength attributed to the refractive index, thereby resulting in the narrowing of the difference between the cutoff wavelengths of the center cores 111 and 112. That results in the narrowing of the difference between the cutoff wavelengths of the center cores 111 and 112.

As explained above, in the multicore fiber 100C according to the fourth embodiment too, not only the difference in the optical properties of the center cores 111 and 112 (including the cutoff wavelength and the macro-bending loss) is insignificant, but the center cores 111 and 112 are easily distinguishable too.

Meanwhile, with reference to FIGS. 2A, 2B, 5A, 5B, 7A, 7B, 9A, and 9B; at the boundaries separating the center core, the intermediate layer, the trench layer or the depressed layer, and the cladding portion, the refractive indices undergo stepwise changes. However, in reality, there are times when the refractive indices undergo gradual changes.

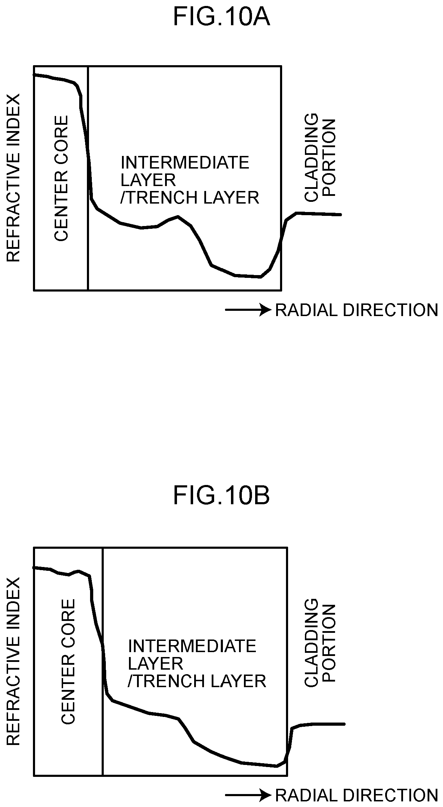

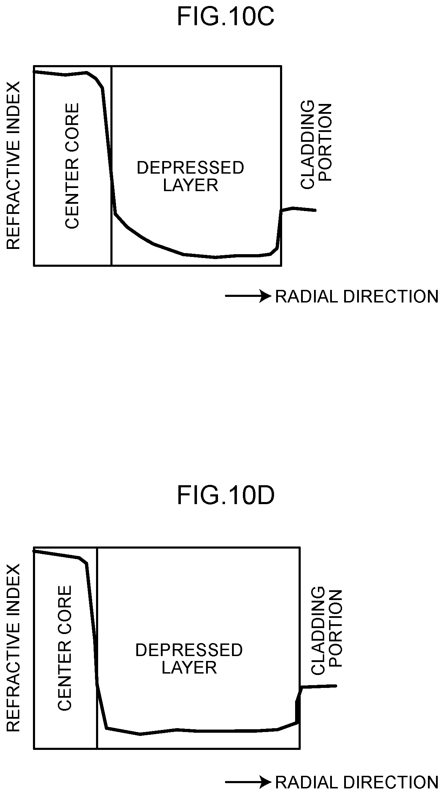

FIGS. 10A, 10B, 10C, and 10D are diagrams illustrating the refractive index profiles in the case in which the refractive indices undergo gradual changes at the boundaries. In FIGS. 10A and 10B are illustrated examples of the trench-type refractive index profiles as explained in the first and second embodiments. In FIGS. 10C and 10D are examples of the W-type refractive index profiles. In the case of a W-type refractive index profile, the intermediate layer is absent, and a depressed layer is present adjacent to the center core and encloses the outer periphery of the center core. The depressed layer corresponds to a low refractive-index layer.

### (Fifth embodiment)

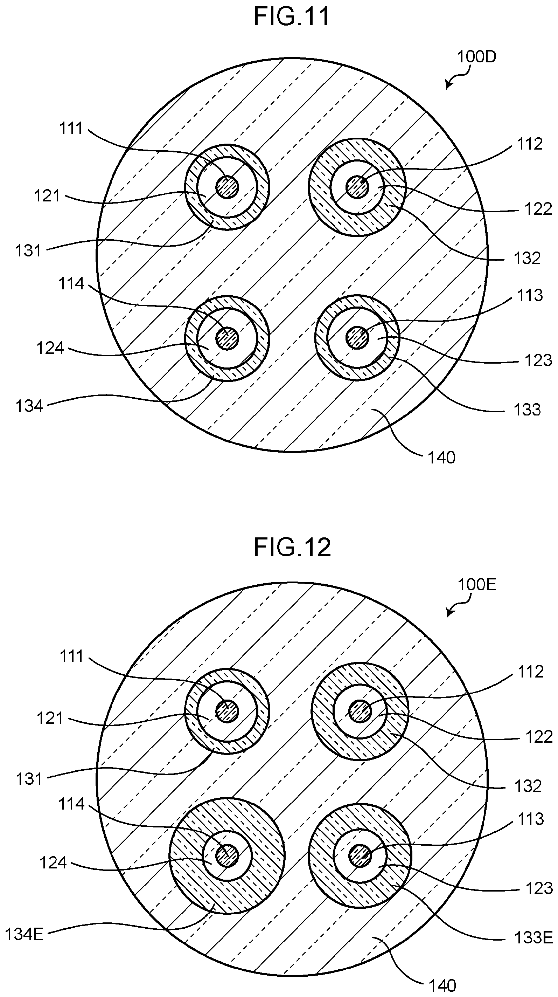

FIG. 11 is a schematic cross-sectional view of a multicore fiber according to a fifth embodiment. A multicore fiber 100D is made of silica glass, and includes center cores 111, 112, 113, and 114; intermediate layers 121, 122, 123, and 124; trench layers 131, 132, 133, and 134; and the cladding portion 140.

The center cores 111 to 114 have a substantially circular cross-section and are arranged in a square lattice pattern. Moreover, the center cores 111 to 114 are arranged to have four-fold rotational symmetry with respect to the central axis of the cladding portion 140 having a substantially circular cross-section. The intermediate layers 121 to 124 have a substantially ring-shaped cross-section and enclose the outer periphery of the center cores 111 to 114, respectively. The trench layers 131 to 134 have a substantially ring-shaped cross-section. The trench layer 131 encloses the outer periphery of the center core 111 and the intermediate layer 121; the trench layer 132 encloses the outer periphery of the center core 112 and the intermediate layer 122; the trench layer 133 encloses the outer periphery of the center core 113 and the intermediate layer 123; and the trench layer 134 encloses the outer periphery of the center core 114 and the intermediate layer 124.

The center cores 111, 113, and 114 have the same refractive index profile as the refractive index profile of the center core 111 of the multicore fiber 100 according to the first embodiment; the intermediate layers 121, 123, and 124 have the same refractive index profile as the refractive index profile of the intermediate layer 121 of the multicore fiber 100 according to the first embodiment; and the trench layers 131, 133, and 134 have the same refractive index profile as the refractive index profile of the trench layer 131 of the multicore fiber 100 according to the first embodiment. Hence, the center cores 111, 113, and 114 have the same center core diameter and the same center core Δ; and the trench layers 131, 133, and 134 have the same trench Δ, the same outer diameter b, and the same outer diameter c. Moreover, the center core 112, the intermediate layer 122, and the trench layer 132 have the same refractive index profile as the refractive index profile of the center core 112, the intermediate layer 122, and the trench layer 132, respectively, of the multicore fiber 100 according to the first embodiment.

In the multicore fiber 100D configured in the manner explained above, between each of the center cores 111, 113, and 114 and the center core 112, the absolute value of the difference in the center cores Δ and the absolute value of the difference in the center core diameters 2a are 10% or less of the center core Δ and the center core diameter 2a, respectively, and more particularly are equal to 0%. Moreover, between each of the trench layers 131, 133, and 134 and the trench layer 132, the absolute value of the difference in the ratios of the outer diameters with respect to the center core diameters is 10% or more of the smaller value of (c/a) and (c'/a). As a result, in the multicore fiber 100D, in an identical manner to the other embodiments, there is not much difference in the optical properties of the center cores 111, 112, 113, and 114. Moreover, when the cross-sectional surface of the multicore fiber 100D is observed under a microscope, the trench layers 131, 133, and 134 are easily distinguishable from the trench layer 132. As a result, the center cores 111, 113, and 114 are also easily distinguishable from the center core 112, and there is also no need to provide a marker or have an asymmetrical arrangement. Thus, for example, one of the trench layers 131, 133, and 134 and the trench layer 132 represent an example of two low-refractive-index layers between which the difference in the ratios of the outer diameters with respect to the center core diameters has the absolute value to be greater by 10% or more.

### (Sixth embodiment)

FIG. 12 is a schematic cross-sectional view of a multicore fiber according to a sixth embodiment. A multicore fiber 100E is configured by substituting trench layers 133E and 134E for the trench layers 133 and 134 of the multicore fiber 100D illustrated in FIG. 11.

The trench layers 132 and 133E have mutually different outer diameters, and the absolute value of the difference in the ratios of the outer diameters with respect to the center core diameters is 10% or more of one of the ratios. Moreover, the trench layers 133E and 134E have mutually different outer diameters, and the absolute value of the difference in the ratios of the outer diameters with respect to the center core diameters is 10% or more of the smaller ratio. Meanwhile, the trench layers 131, 132, 133E, and 134E have the same trench Δ.

In the multicore fiber 100E configured in the manner explained above, in an identical manner to the other embodiments, there is not much difference in the optical properties of the center cores 111 to 114. Moreover, when the cross-sectional surface of the multicore fiber 100E is observed under a microscope, the trench layers 131, 132, 133E, and 134E are easily distinguishable from each other. As a result, the center cores 111 to 114 are also easily distinguishable from each other, and there is also no need to provide a marker or have an asymmetrical arrangement.

### (Seventh embodiment)

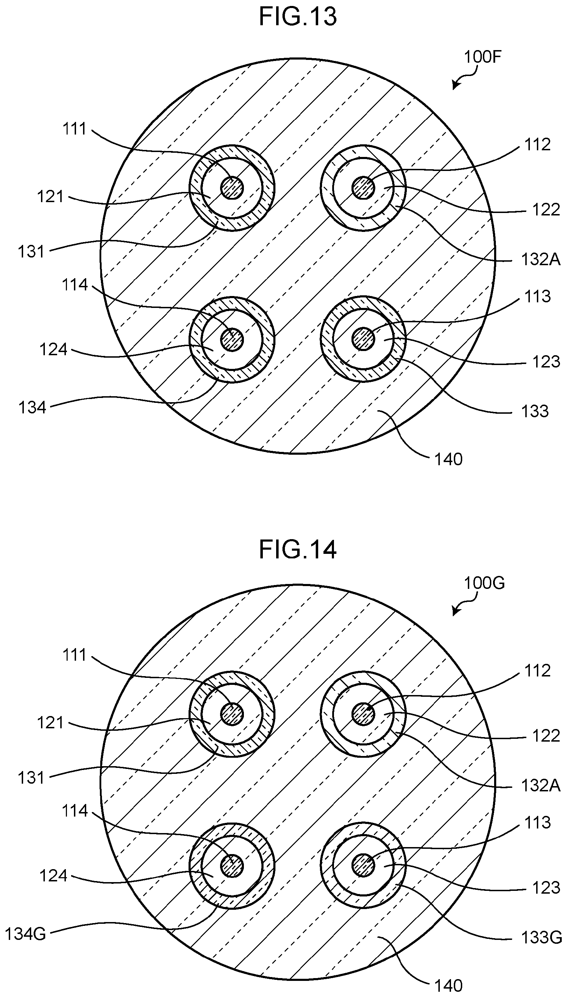

FIG. 13 is a schematic cross-sectional view of a multicore fiber according to a seventh embodiment. A multicore fiber 100F is configured by substituting the trench layer 132A of the multicore fiber 100A illustrated in FIG. 2 for the trench layer 132 of the multicore fiber 100D illustrated in FIG. 11.

In the multicore fiber 100F configured in the manner explained above, in an identical manner to the other embodiments, there is not much difference in the optical properties of the center cores 111 to 114. Moreover, when the cross-sectional surface of the multicore fiber 100F is observed under a microscope, the trench layers 131, 133E, and 134E are easily distinguishable from the trench layer 132A. As a result, the center cores 111, 113, and 114 are also easily distinguishable from the center core 112, and there is also no need to provide a marker or have an asymmetrical arrangement.

### (Eighth embodiment)

FIG. 14 is a schematic cross-sectional view of a multicore fiber according to an eighth embodiment. A multicore fiber 100G is configured by substituting trench layers 133G and 134G for the trench layers 133 and 134 of the multicore fiber 100F illustrated in FIG. 13.

The trench layers 132A and 133G have mutually different trench Δ, and the absolute value of the difference therebetween is 10% or more of the smaller trench Δ. Moreover, the trench layers 133G and 134G have mutually different trench Δ, and the absolute value of the difference therebetween is 10% or more of the smaller trench Δ. Furthermore, the trench layers 134G and 131 have mutually different trench Δ, and the absolute value of the difference therebetween is 10% or more of the smaller trench Δ. Meanwhile, the trench layers 131, 132A, 133G, and 134G have the same outer diameter.

In the multicore fiber 100G configured in the manner explained above, in an identical manner to the other embodiments, there is not much difference in the optical properties of the center cores 111 to 114. Moreover, when the cross-sectional surface of the multicore fiber 100G is observed under a microscope, the trench layers 131, 132A, 133G, and 134G are easily distinguishable from each other. As a result, the center cores 111 to 114 are also easily distinguishable from each other, and there is also no need to provide a marker or have an asymmetrical arrangement.

### (Ninth embodiment)

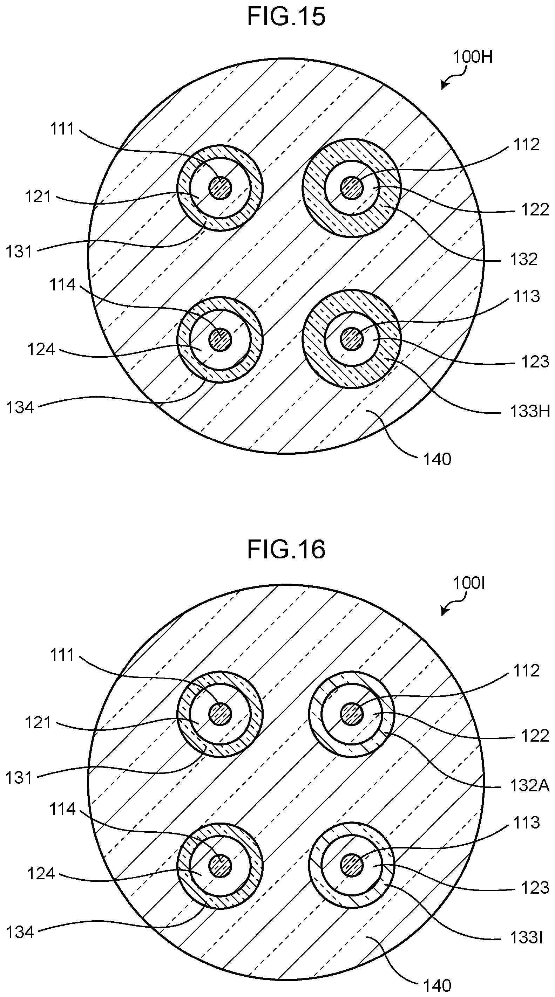

FIG. 15 is a schematic cross-sectional view of a multicore fiber according to a ninth embodiment. A multicore fiber 100H is configured by substituting a trench layer 133H for the trench layer 133 of the multicore fiber 100D illustrated in FIG. 11.

The trench layers 132 and 133H have the same outer diameter. Accordingly, the trench layer 133H has a different outer diameter from the outer diameter of the trench layers 131 and 134, and the difference in the ratios of the outer diameters with respect to the center core diameters has the absolute value of 10% or more of the smaller ratio. Meanwhile, the trench layers 131, 132, 133H, and 134 have the same trench Δ.

In the multicore fiber 100H configured in the manner explained above, in an identical manner to the other embodiments, there is not much difference in the optical properties of the center cores 111 to 114. Moreover, when the cross-sectional surface of the multicore fiber 100H is observed under a microscope, the trench layers 131, 132, 133H, and 134 are easily distinguishable from each other. As a result, the center cores 111 to 114 are also easily distinguishable from each other, and there is also no need to provide a marker or have an asymmetrical arrangement.

### (10-th embodiment)

FIG. 16 is a schematic cross-sectional view of a multicore fiber according to a 10-th embodiment. A multicore fiber 100I is configured by substituting a trench layer 133I for the trench layer 133 of the multicore fiber 100F illustrated in FIG. 13.

The trench layers 132A and 133I have the same trench Δ. Accordingly, the trench layer 133I has a different trench Δ from the trench Δ of the trench layers 131 and 134, and the absolute value of the difference in those trench Δ is 10% or more of the smaller trench Δ. Meanwhile, the trenches 131, 132A, 133I, and 134 have the same outer diameter.

In the multicore fiber 100I configured in the manner explained above, in an identical manner to the other embodiments, there is not much difference in the optical properties of the center cores 111 to 114. Moreover, when the cross-sectional surface of the multicore fiber 100G is observed under a microscope, the trench layers 131, 132A, 133I, and 134 are easily distinguishable from each other. As a result, the center cores 111 to 114 are also easily distinguishable from each other, and there is also no need to provide a marker or have an asymmetrical arrangement.

### (11-th embodiment)

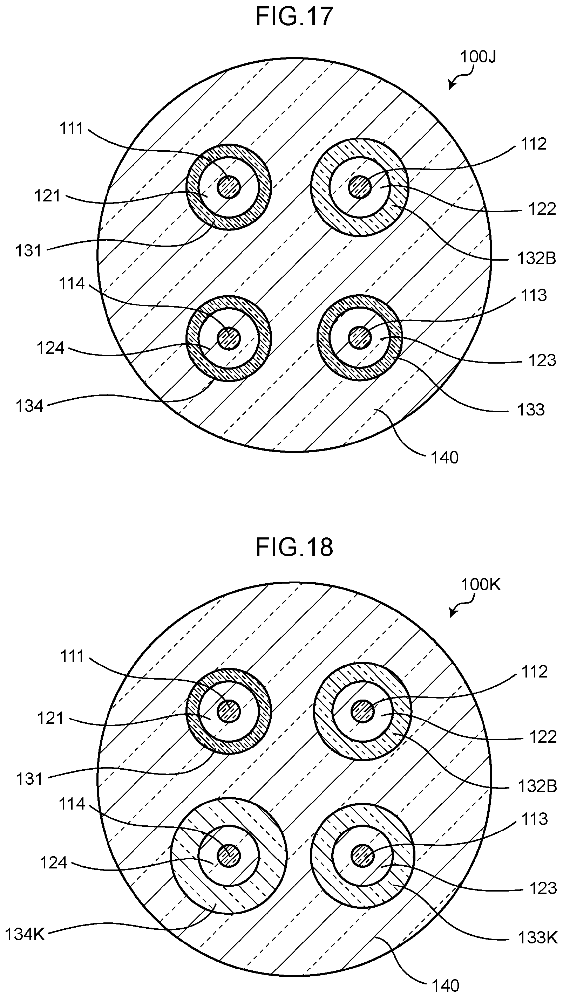

FIG. 17 is a schematic cross-sectional view of a multicore fiber according to an 11-th embodiment. A multicore fiber 100J is configured by substituting the trench layer 133B of the multicore fiber 100B illustrated in FIG. 6 for the trench layer 132 of the multicore fiber 100D illustrated in FIG. 11.

The center cores 111, 113, and 114 represent examples of a first center core, and the center core 112 represents an example of a second center core. The trench layers 131, 133, and 134 represent examples of a first low-refractive-index layer, and the trench layer 132 represents an example of a second low-refractive-index layer.

In the multicore fiber 100J configured in the manner explained above, in an identical manner to the other embodiments, there is not much difference in the optical properties of the center cores 111, 112, 113, and 114 (including the cutoff wavelength and the macro-bending loss). Moreover, when the cross-sectional surface of the multicore fiber 100J is observed under a microscope, the trench layers 131, 133, and 134 are easily distinguishable from the trench layer 132B. As a result, the center cores 111, 113, and 114 are also easily distinguishable from the center core 112, and there is also no need to provide a marker or have an asymmetrical arrangement.

### (12-th embodiment)

FIG. 18 is a schematic cross-sectional view of a multicore fiber according to a 12-th embodiment. A multicore fiber 100K is configured by substituting trench layers 133K and 134K for the trench layers 133 and 134 of the multicore fiber 100J illustrated in FIG. 17.

The outer diameter of the trench layer 133K is greater than the outer diameter of the trench layer 132B, and the difference in the ratios of the outer diameters with respect to the center core diameters is 10% or more of the smaller ratio. Moreover, the outer diameter of the trench layer 134K is greater than the outer diameter of the trench layer 133K, and the difference in the ratios of the outer diameters with respect to the center core diameters is 10% or more of the smaller ratio. Furthermore, the trench layer 133K has a greater minimum refractive index than the minimum refractive index of the trench layer 132B, but has a smaller absolute value of the trench Δ than the trench Δ of the trench layer 132B. Moreover, the trench layer 134K has a greater minimum refractive index than the minimum refractive index of the trench layer 133K, but has a smaller absolute value of the trench Δ than the trench Δ of the trench layer 133K.

When the trench layer 131 is treated as a first low-refractive-index layer, the trench layers 132B, 133K, and 134K correspond to second low-refractive-index layers. When the trench layer 132B is treated as a first low-refractive-index layer, the trench layers 133K and 134K correspond to second low-refractive-index layers. When the trench layer 133K is treated as a first low-refractive-index layer, the trench layer 134K corresponds to a second low-refractive-index layer.

In the multicore fiber 100K configured in the manner explained above, in an identical manner to the other embodiments, there is not much difference in the optical properties of the center cores 111 to 114 (including the cutoff wavelength and the macro-bending loss). Moreover, when the cross-sectional surface of the multicore fiber 100K is observed under a microscope, the trench layers 131, 132B, 133K, and 134K are easily distinguishable from each other. As a result, the center cores 111 to 114 are also easily distinguishable from each other, and there is also no need to provide a marker or have an asymmetrical arrangement.

### (13-th embodiment)

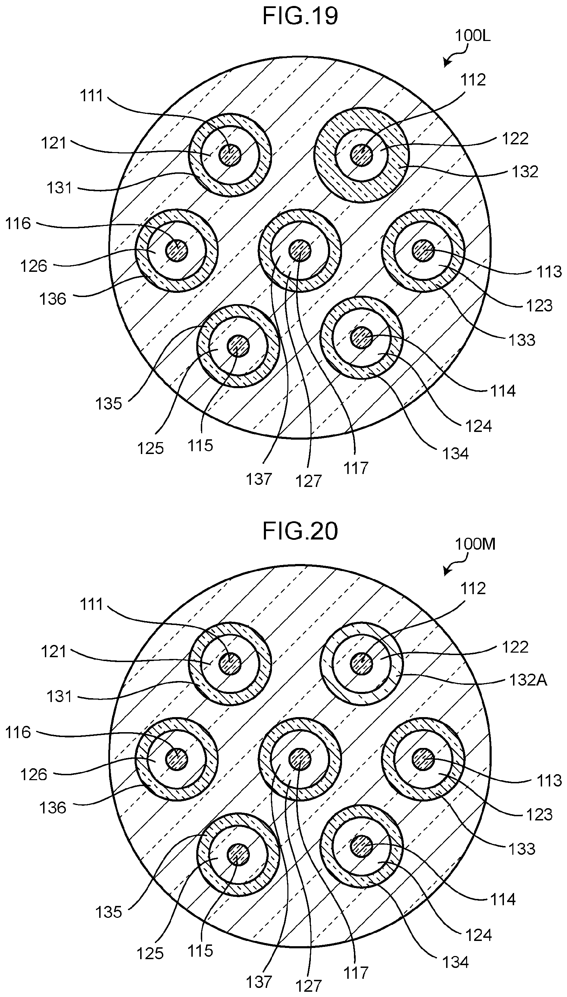

FIG. 19 is a schematic cross-sectional view of a multicore fiber according to a 13-th embodiment. A multicore fiber 100L is made of silica glass and includes center cores 111, 112, 113, 114, 115, 116, and 117; intermediate layers 121, 122, 123, 124, 125, 126, and 127; trench layers 131, 132, 133, 134, 135, 136, and 137; and the cladding portion 140.

The center cores 111 to 117 have a substantially circular cross-section and are arranged in a triangular lattice pattern. Moreover, the center cores 111 to 117 are arranged to have six-fold rotational symmetry with respect to the central axis of the cladding portion 140 having a substantially circular cross-section. The intermediate layers 121 to 127 have a substantially ring-shaped cross-section and enclose the outer periphery of the center cores 111 to 117, respectively. The trench layers 131 to 137 have a substantially ring-shaped cross-section. The trench layer 131 encloses the outer periphery of the center core 111 and the intermediate layer 121; the trench layer 132 encloses the outer periphery of the center core 112 and the intermediate layer 122; the trench layer 133 encloses the outer periphery of the center core 113 and the intermediate layer 123; the trench layer 134 encloses the outer periphery of the center core 114 and the intermediate layer 124; the trench layer 135 encloses the outer periphery of the center core 115 and the intermediate layer 125; the trench layer 136 encloses the outer periphery of the center core 116 and the intermediate layer 126; and the trench layer 137 encloses the outer periphery of the center core 117 and the intermediate layer 127.

The center core 111 and the center cores 113 to 117 have the same refractive index profile as the same refractive index profile of the center core 111 of the multicore fiber 100 according to the first embodiment; the intermediate layer 121 and the intermediate layers 123 to 127 have the same refractive index profile as the same refractive index profile of the intermediate layer 121 of the multicore fiber 100 according to the first embodiment; and the trench layer 131 and the trench layers 133 to 137 have the same refractive index profile as the same refractive index profile of the trench layer 131 of the multicore fiber 100 according to the first embodiment. Hence, the center core 111 and the center cores 113 to 117 have the same center core diameter and the same center core Δ; and the trench layer 131 and the trench layers 133 to 137 have the same trench Δ. Moreover, the center core 112 has the same refractive index profile as the same refractive index profile of the center core 112 of the multicore fiber 100 according to the first embodiment; the intermediate layer 122 has the same refractive index profile as the same refractive index profile of the intermediate layer 122 of the multicore fiber 100 according to the first embodiment; and the trench layer 132 has the same refractive index profile as the same refractive index profile of the trench layer 132 of the multicore fiber 100 according to the first embodiment.

In the multicore fiber 100L configured in the manner explained above, between the center core 111 and the center core 112 and between each of the center cores 113 to 117 and the center core 112, the absolute value of the difference in the center cores Δ and the absolute value of the difference in the center core diameters 2a are 10% or less of the center core Δ and the center core diameter 2a, respectively, and more particularly are equal to 0%. Moreover, between the trench layer 131 and the trench layer 132 and between each of the trench layers 133 to 137 and the trench layer 132, the difference in the ratios of the outer diameters with respect to the center core diameters is 10% or more of the smaller trench Δ. As a result, in the multicore fiber 100L, in an identical manner to the other embodiments, there is not much difference in the optical properties of the center cores 111 to 117. Moreover, when the cross-sectional surface of the multicore fiber 100L is observed under a microscope, the trench layer 131 and the trench layers 133 to 137 are easily distinguishable from the trench layer 132. As a result, the center core 111 and the center cores 113 to 117 are also easily distinguishable from the center core 112, and there is also no need to provide a marker or have an asymmetrical arrangement.

### (14-th embodiment)

FIG. 20 is a schematic cross-sectional view of a multicore fiber according to a 14-th embodiment. A multicore fiber 100M is configured by substituting the trench layer 132A of the multicore fiber 100A illustrated in FIG. 2 for the trench layer 132 of the multicore fiber 100L illustrated in FIG. 19.

In the multicore fiber 100L configured in the manner explained above, in an identical manner to the other embodiments, there is not much difference in the optical properties of the center cores 111 to 117. Moreover, when the cross-sectional surface of the multicore fiber 100D is observed under a microscope, the trench layer 131 and the trench layers 133 to 137 are easily distinguishable from the trench layer 132A. As a result, the center core 111 and the center cores 113 to 117 are also easily distinguishable from the center core 112, and there is also no need to provide a marker or have an asymmetrical arrangement.

Meanwhile, in the multicore fiber according to any one of the embodiments described above, it is desirable that the center cores perform single-mode propagation of the input light. Herein, the input wavelength represents the wavelength used as the signal light in the optical fiber communication and, for example, represents the light in the 1.55 µm range. Meanwhile, regarding a trench layer, when the trench Δ or the ratio of the outer diameter with respect to the center core diameter is large, the distinguishability also increases. However, if the ratio becomes too large, the propagation state changes to multimode propagation. Hence, attention needs to be paid to that point. More particularly, the configuration can be such that the trench Δ is equal to or greater than minus 0.8%, and the ratio of the outer diameter with respect to the center core diameter of the trench layer is equal to or smaller than 6.

Moreover, from the perspective of compatibility with a large number of conventional optical fibers, in addition to having the center cores perform single-mode propagation of the input light, it is desirable that the effective core area (Aeff) at the wavelength of the input light is equal to or greater than 60 µm² and equal to or smaller than 180 µm². Meanwhile, the present inventors performed a systematic research by setting the refractive index profile to the W-type refractive index profile and the trench-type refractive index profile; it was noticed that, among a plurality of center cores, when the absolute value of the difference in the center cores Δ was set to be equal to or smaller than 10% of the center core Δ and when the absolute value of the difference in the center core diameters was set to be equal to or smaller than 10% of the center core diameter, the absolute value of the difference in the effective core areas can be set to be 10% or less, or moreover 6% or less of the smaller effective core area, regardless of whether the relative refractive-index difference or the outer diameter of the low-refractive-index layers is varied.

Meanwhile, in an identical manner to the multicore fiber according to the first embodiment, the multicore fiber according to any one of the second to 14-th embodiments can also be manufactured according to a known glass preform manufacturing method; a known boring method used for multicore fiber manufacturing; and a known fiber drawing method.

### (Working example 1-1)

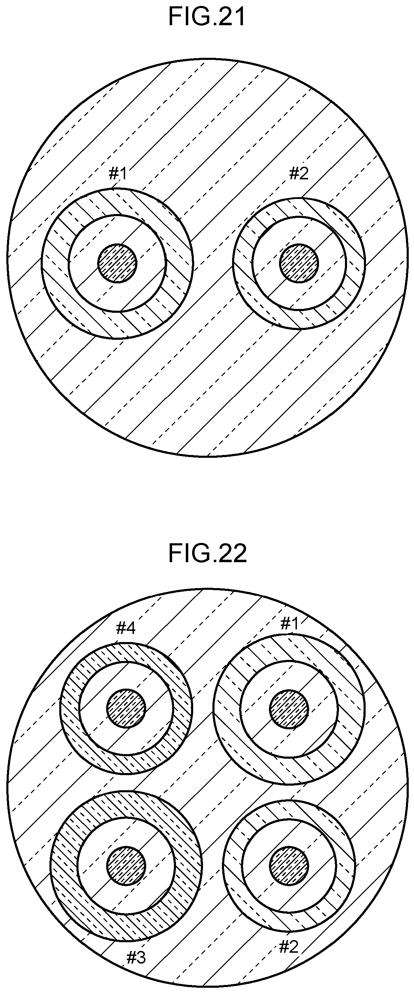

As a working example 1-1, a multicore fiber illustrated in FIG. 21 was manufactured. The structural parameters and the optical properties according to the working example 1-1 are given in Table 2-1. The multicore fiber according to the working example 1-1 is a two-core fiber as explained in the first embodiment. Herein, the cores #1 and #2 are set to have the same center core Δ, the same center core diameter 2a, and the same trench Δ; and are set to have the ratios (c/a) of the outer diameter with respect to the center core diameter to be different from one of ratio by 10% or more. In the Table, the cladding ratio at the center core Δ represents the relative refractive-index difference of the maximum refractive index of the center core with respect to the average refractive index of the cladding portion; and the pure silica ratio represents the relative refractive-index difference of the maximum refractive index of the center core with respect to the refractive index of pure silica glass. In an identical manner, the cladding ratio at the trench Δ represents the relative refractive-index difference of the minimum refractive index of the trench layer with respect to the average refractive index of the cladding portion; and the pure silica ratio represents the relative refractive-index difference of the minimum refractive index of the trench layer with respect to the refractive index of pure silica glass. Moreover, the cladding Δ represents the relative refractive-index difference of the average refractive index of the cladding portion with respect to the refractive index of pure silica glass. Furthermore, with reference to the Table, the bending loss corresponds to the case in which the multicore fiber is wound at the diameter of 30 mm. As illustrated in Table 2-1, the cores #1 and #2 had the substantially same optical properties such as the effective core area, the dispersion, the dispersion slope, and the transmission loss. Moreover, it was confirmed that the light having the cutoff wavelength to be equal to or smaller than 1530 nm and having the wavelength in the 1.55 µm range was propagatable in the single mode.

**Table 2-1**

| | Core #1 | Core #2 |
|---|---|---|
| Center core Δ [%] (cladding ratio/pure silica ratio) | 0.27/0.09 | 0.27/0.09 |
| Trench Δ [%] (cladding ratio/pure silica ratio) | -0.13/-0.31 | -0.13/-0.31 |
| Cladding Δ [%] (pure silica ratio) | -0.18 | -0.18 |
| Center core diameter 2a [mm] | 11.8 | 11.8 |
| b/a | 2.5 | 2.5 |
| c/a | 4.0 | 3.5 |
| Aeff @ 1550 nm [µm²] | 125 | 125 |
| λcc [nm] | 1506 | 1477 |
| Dispersion @ 1550 nm [ps/nm/km] | 19.9 | 19.9 |
| Dispersion Slope [ps/nm²/km] | 0.063 | 0.063 |
| Bending loss @ 1550 nm/30 mm ϕ[dB/m] | 0.17 | 0.37 |
| Transmission loss @ 1550 nm [dB/km] | 0.151 | 0.150 |

Meanwhile, when a technician observed an end face of the multicore fiber according to the working example 1-1 and carried out a core distinguishing test for several times, it was confirmed that the cores could be distinguished with little to no trouble and with the accuracy rate of 99.9%.

### (Working example 1-2)

As a working example 1-2, a multicore fiber illustrated in FIG. 22 was manufactured. The structural parameters and the optical properties according to the working example 1-2 are given in Table 2-2. The multicore fiber according to the working example 1-2 is a two-core fiber as explained in the third to eighth embodiments. Herein, the cores #1 to #4 are set to have the same center core Δ and the same center core diameter 2a; are set to have the ratios (c/a) of the outer diameter with respect to the center core diameter to be different by 10% or more of one of ratio; and/or are set to have the trench Δ to be different by 10% or more of one of trench Δ. As illustrated in Table 2-2, the cores #1 to #4 had the substantially same optical properties such as the effective core area, the dispersion, the dispersion slope, and the transmission loss. Moreover, it was confirmed that the light having the cutoff wavelength to be equal to or smaller than 1530 nm and having the wavelength in the 1.55 µm range was propagatable in the single mode.

**Table 2-2**

| | Core #1 | Core #2 | Core #3 | Core #4 |
|---|---|---|---|---|
| Center core Δ [%] (cladding ratio/pure silica ratio) | 0.27/0.09 | 0.27/0.09 | 0.27/0.09 | 0.27/0.09 |
| Trench Δ [%] (cladding ratio/pure silica ratio) | -0.13/-0.31 | -0.13/-0.31 | -0.18/-0.36 | -0.18/-0.36 |
| Cladding Δ [%] (pure silica ratio) | -0.18 | -0.18 | -0.18 | -0.18 |
| Center core diameter 2a [mm] | 11.8 | 11.8 | 11.8 | 11.8 |
| b/a | 2.5 | 2.5 | 2.5 | 2.5 |
| c/a | 4.0 | 3.5 | 4.0 | 3.5 |
| Aeff @ 1550 nm [µm²] | 125 | 125 | 125 | 125 |
| λcc [nm] | 1490 | 1468 | 1521 | 1483 |
| Dispersion @ 1550 nm [ps/nm/km] | 19.9 | 19.9 | 19.9 | 19.9 |
| Dispersion Slope [ps/nm²/km] | 0.063 | 0.063 | 0.063 | 0.063 |
| Bending loss @ 1550 nm/30 mm ϕ[dB/m] | 0.20 | 0.44 | 0.07 | 0.16 |
| Transmission loss @ 1550 nm [dB/km] | 0.153 | 0.152 | 0.154 | 0.153 |

Meanwhile, when a technician observed an end face of the multicore fiber according to the working example 1-1 and carried out a core distinguishing test for several times, it was confirmed that the cores could be distinguished with little to no trouble and with the accuracy rate of 99.4%.

### (Working example 2-1)

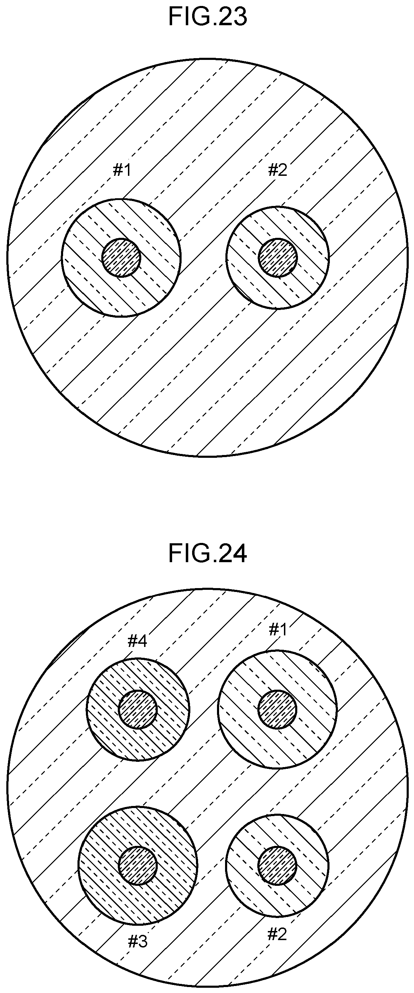

As a working example 2-1, a multicore fiber illustrated in FIG. 23 was manufactured. The structural parameters and the optical properties according to the working example 2-1 are given in Table 3-1. The multicore fiber according to the working example 2-1 is a two-core fiber having the W-type refractive index profile and having depressed layers as the low-refractive-index layers. Herein, the cores #1 and #2 are set to have the same center core Δ, the same center core diameter 2a, and the same depressed Δ; and are set to have the ratios (b/a) of the outer diameter of the depressed layer with respect to the center core diameter to be different from one of ratios by 10% or more. In the Table, the cladding ratio at the depressed Δ represents the relative refractive-index difference of the minimum refractive index of the depressed layer with respect to the average refractive index of the cladding portion; and the pure silica ratio represents the relative refractive-index difference of the minimum refractive index of the depressed layer with respect to the refractive index of pure silica glass. As illustrated in Table 3-1, the cores #1 and #2 had the substantially same optical properties such as the effective core area, the dispersion, the dispersion slope, and the transmission loss. Moreover, it was confirmed that the light having the cutoff wavelength to be equal to or smaller than 1530 nm and having the wavelength in the 1.55 µm range was propagatable in the single mode.

**Table 3-1**

| | Core #1 | Core #2 |
|---|---|---|
| Center core Δ [%] (cladding ratio/pure silica ratio) | 0.27/0.10 | 0.27/0.10 |
| Depressed Δ [%] (cladding ratio/pure silica ratio) | -0.10/-0.27 | -0.10/-0.27 |
| Cladding Δ [%] (pure silica ratio) | -0.17 | -0.17 |
| Center core diameter 2a [mm] | 12.5 | 12.5 |
| b/a | 3.0 | 2.5 |
| Aeff @ 1550 nm [µm²] | 113 | 114 |
| λcc [nm] | 1426 | 1401 |
| Dispersion @ 1550 nm [ps/nm/km] | 20.8 | 20.8 |
| Dispersion slope [ps/nm²/km] | 0.062 | 0.062 |
| Bending loss @ 1550 nm/30 mm ϕ[dB/m] | 0.26 | 0.77 |
| Transmission loss @ 1550 nm [dB/km] | 0.153 | 0.152 |

Meanwhile, when a technician observed an end face of the multicore fiber according to the working example 2-1 and carried out a core distinguishing test for several times, it was confirmed that the cores could be distinguished with little to no trouble and with the accuracy rate of 99.9%.

### (Working example 2-2)

As a working example 2-2, a multicore fiber illustrated in FIG. 24 was manufactured. The structural parameters and the optical properties according to the working example 2-2 are given in Table 3-2. The multicore fiber according to the working example 1-2 is a four-core fiber having the W-type refractive index profile and having depressed layers as the low-refractive-index layers in an identical manner to the working example 2-1. Herein, the cores #1 to #4 are set to have the same center core Δ and the same center core diameter 2a; are set to have the ratios (b/a) of the outer diameter of the depressed layer with respect to the center core diameter to be different from one of ratios by 10% or more; and are/or are set to have the depressed Δ to be different from one of the depressed Δs by 10% or more. As illustrated in Table 3-2, in the cores #1 to #4 had the substantially same optical properties such as the effective core area, the dispersion, the dispersion slope, and the transmission loss. Moreover, it was confirmed that the light having the cutoff wavelength to be equal to or smaller than 1530 nm and having the wavelength in the 1.55 µm range was propagatable in the single mode.

**Table 3-2**

| | Core #1 | Core #2 | Core #3 | Core #4 |
|---|---|---|---|---|
| Center core Δ [%] (cladding ratio/pure silica ratio) | 0.27/0.10 | 0.27/0.10 | 0.27/0.10 | 0.27/0.10 |
| Depressed Δ [%] (cladding ratio/pure silica ratio) | -0.10/-0.27 | -0.10/-0.27 | -0.16/-0.33 | -0.16/-0.33 |
| Cladding Δ [%] (pure silica ratio) | -0.17 | -0.17 | -0.17 | -0.17 |
| Center core diameter 2a [mm] | 12.5 | 12.5 | 12.5 | 12.5 |
| b/a | 3.0 | 2.5 | 3.0 | 2.5 |
| Aeff @ 1550 nm [µm²] | 113 | 114 | 108 | 109 |
| λcc [nm] | 1402 | 1388 | 1428 | 1396 |
| Dispersion @ 1550 nm [ps/nm/km] | 20.9 | 20.8 | 20.9 | 20.9 |
| Dispersion Slope [ps/nm²/km] | 0.062 | 0.062 | 0.062 | 0.062 |
| Bending loss @ 1550 nm/30 mm ϕ[dB/m] | 0.27 | 0.79 | 0.07 | 0.18 |
| Transmission loss @ 1550 nm [dB/km] | 0.154 | 0.153 | 0.156 | 0.155 |

Meanwhile, when a technician observed an end face of the multicore fiber according to the working example 2-2 and carried out a core distinguishing test for several times, it was confirmed that the cores could be distinguished with little to no trouble and with the accuracy rate of 99.2%.

### (Working example 3-1)

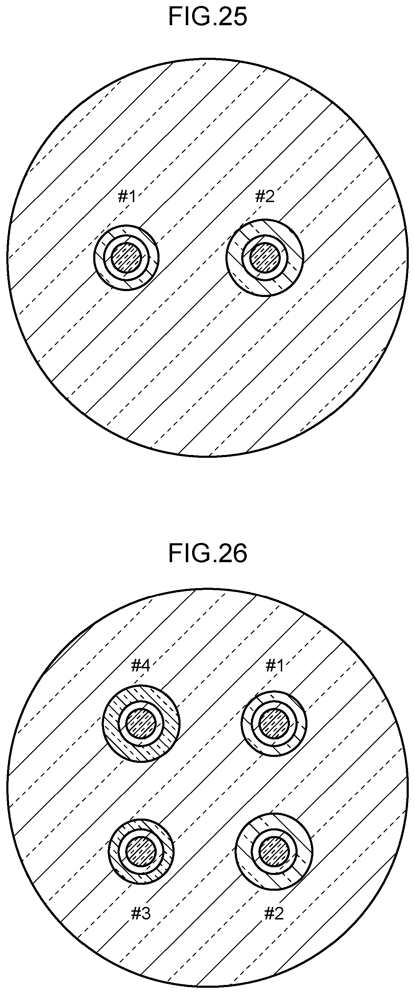

As a working example 3-1, a multicore fiber illustrated in FIG. 25 was manufactured. The structural parameters and the optical properties according to the working example 3-1 are given in Table 4-1. The multicore fiber according to the working example 3-1 is a two-core fiber as explained in the first embodiment. Herein, the cores #1 and #2 are set to have the same center core Δ, the same center core diameter 2a, and the same trench Δ; and are set to have the ratios (c/a) of the outer diameter with respect to the center core diameter to be different from one of ratios by 10% or more. Note that, the structural parameters were set to have the effective core area to be approximately equal to 80 µm². As illustrated in Table 4-1, the cores #1 and #2 had the substantially same optical properties such as the effective core area, the dispersion, the dispersion slope, and the transmission loss. Moreover, it was confirmed that the light having the cutoff wavelength to be equal to or smaller than 1530 nm and having the wavelength in the 1.55 µm range was propagatable in the single mode.

**Table 4-1**

| | Core #1 | Core #2 |
|---|---|---|
| Center core Δ [%] (cladding ratio/pure silica ratio) | 0.37/0.11 | 0.37/0.11 |
| Trench Δ [%] (cladding ratio/pure silica ratio) | -0.11/-0.37 | -0.11/-0.37 |
| Cladding Δ [%] (pure silica ratio) | -0.26 | -0.26 |
| Center core diameter 2a [mm] | 9.3 | 9.3 |
| b/a | 1.5 | 1.5 |
| c/a | 2.2 | 2.6 |
| Aeff @ 1550 nm [µm²] | 81 | 81 |
| λcc [nm] | 1367 | 1394 |
| Dispersion @ 1550 nm [ps/nm/km] | 17.2 | 17.2 |
| Dispersion Slope [ps/nm²/km] | 0.061 | 0.061 |
| Bending loss @ 1550 nm/30 mm ϕ[dB/m] | 0.05 | 0.03 |
| Transmission loss @ 1550 nm [dB/km] | 0.156 | 0.155 |

Meanwhile, when a technician observed an end face of the multicore fiber according to the working example 3-1 and carried out a core distinguishing test for several times, it was confirmed that the cores could be distinguished with little to no trouble and with the accuracy rate of 99.8%.

### (Working example 3-2)

As a working example 3-2, a multicore fiber illustrated in FIG. 26 was manufactured. The structural parameters and the optical properties according to the working example 3-2 are given in Table 4-2. The multicore fiber according to the working example 3-2 is a four-core fiber. Herein, the cores #1 to #4 are set to have the same center core Δ and the same center core diameter 2a; are set to have the ratios (c/a) of the outer diameter with respect to the center core diameter to be different from one of the ratios by 10% or more; and/or are set to have the trench Δ to be different from one of the trench Δs by 10% or more. However, the structural parameters were set to have the effective core area to be approximately equal to 80 µm². As illustrated in Table 4-2, the cores #1 to #4 had the substantially same optical properties such as the effective core area, the dispersion, the dispersion slope, and the transmission loss. Moreover, it was confirmed that the light having the cutoff wavelength to be equal to or smaller than 1530 nm and having the wavelength in the 1.55 µm range was propagatable in the single mode.

**Table 4-2**

| | Core #1 | Core #2 | Core #3 | Core #4 |
|---|---|---|---|---|
| Center core Δ [%] (cladding ratio/pure silica ratio) | 0.37/0.11 | 0.37/0.11 | 0.37/0.11 | 0.37/0.11 |
| Trench Δ [%] (cladding ratio/pure silica ratio) | -0.11/-0.37 | -0.11/-0.37 | -0.17/-0.43 | -0.17/-0.43 |
| Cladding Δ [%] (pure silica ratio) | -0.26 | -0.26 | -0.26 | -0.26 |
| Center core diameter 2a [mm] | 9.3 | 9.3 | 9.3 | 9.3 |
| b/a | 1.5 | 1.5 | 1.5 | 1.5 |
| c/a | 2.2 | 2.6 | 2.2 | 2.6 |
| Aeff @ 1550 nm [µm²] | 81 | 81 | 80 | 80 |
| λcc [nm] | 1351 | 1388 | 1344 | 1382 |
| Dispersion @ 1550 nm [ps/nm/km] | 17.2 | 17.2 | 17.3 | 17.3 |
| Dispersion Slope [ps/nm²/km] | 0.061 | 0.061 | 0.061 | 0.061 |
| Bending loss @ 1550 nm/30 mm ϕ[dB/m] | 0.05 | 0.03 | 0.05 | 0.04 |
| Transmission loss @ 1550 nm [dB/km] | 0.157 | 0.158 | 0.158 | 0.157 |

Meanwhile, when a technician observed an end face of the multicore fiber according to the working example 3-2 and carried out a core distinguishing test for several times, it was confirmed that the cores could be distinguished with little to no trouble and with the accuracy rate of 99.5%.

### (Working example 4)

A multicore fiber according to a working example 4 was manufactured. The structural parameters and the optical properties according to the working example 4 are given in Table 5. The multicore fiber according to the working example 4 is a trench-type two-core fiber as explained in the third embodiment. Herein, the cores #1 and #2 are set to have the same center core Δ and the same center core diameter 2a. The center cores were designed to have the effective core area to be approximately equal to 125 µm². Moreover, the ratio (c/a) of the outer diameter with respect to the center core diameter in the core #2 was set to be greater than the ratio in the core #1 by 10% or more. Furthermore, the absolute value of the trench Δ in the core #2 was set to be smaller than the absolute value in the core #1. Meanwhile, in the Table, the bending loss corresponds to the case in which the multicore fiber is wound at the diameter of 30 mm. As illustrated in Table 5, the cores #1 and #2 had the substantially same optical properties such as the effective core area, the dispersion, the dispersion slope, the transmission loss, the cutoff wavelength, and the macro-bending loss. Moreover, it was confirmed that the light having the cutoff wavelength to be equal to or smaller than 1530 nm and having the wavelength in the 1.55 µm range was propagatable in the single mode.

**Table 5**

| | Core #1 | Core #2 |
|---|---|---|
| Center core Δ [%] (cladding ratio/pure silica ratio) | 0.27/0.09 | 0.27/0.09 |
| Trench Δ [%] (cladding ratio/pure silica ratio) | -0.20/-0.38 | -0.13/-0.31 |
| Cladding Δ [%] (pure silica ratio) | -0.18 | -0.18 |
| Center core diameter 2a [mm] | 11.8 | 11.8 |
| b/a | 2.5 | 2.5 |
| c/a | 3.5 | 4.0 |
| Aeff @ 1550 nm [µm²] | 125 | 125 |
| λcc [nm] | 1503 | 1502 |
| Wavelength dispersion @ 1550 nm [ps/nm/km] | 19.9 | 19.9 |
| Dispersion Slope [ps/nm²/km] | 0.063 | 0.063 |
| Macro-bending loss @ 1550 nm/30 mm ϕ[dB/m] | 0.12 | 0.17 |
| Transmission loss @ 1550 nm [dB/km] | 0.154 | 0.152 |

Meanwhile, when a technician observed an end face of the multicore fiber according to the working example 4 and carried out a core distinguishing test for several times, it was confirmed that the cores could be distinguished with little to no trouble and with the accuracy rate of 99.7%.

### (Working example 5)

A multicore fiber according to a working example 5 was manufactured. The structural parameters and the optical properties according to the working example 5 are given in Table 6. The multicore fiber according to the working example 2 is a two-core fiber having the W-type refractive index profile as explained in the fourth embodiment. Herein, the cores #1 and #2 are set to have the same center core Δ and the same center core diameter 2a. Moreover, the center cores were designed to have the effective core area to be approximately equal to 110 µm². Moreover, the ratio (b/a) of the outer diameter of the depressed layer with respect to the center core diameter in the core #2 was set to be greater than the ratio in the core #1 by 10% or more. Meanwhile, in the table, the cladding ratio at the depressed Δ represents the relative refractive-index difference of the minimum refractive index of the depressed layer with respect to the average refractive index of the cladding portion; and the pure silica ratio represents the relative refractive-index difference of the minimum refractive index of the depressed layer with respect to the refractive index of pure silica glass. As illustrated in Table 6, the cores #1 and #2 had the substantially same optical properties such as the effective core area, the dispersion, the dispersion slope, the transmission loss, and the cutoff wavelength; and had only a small difference in the macro-bending loss. Moreover, it was confirmed that the light having the cutoff wavelength to be equal to or smaller than 1530 nm and having the wavelength in the 1.55 µm range was propagatable in the single mode.

**Table 6**

| | Core #1 | Core #2 |
|---|---|---|
| Center core Δ [%] (cladding ratio/pure silica ratio) | 0.27/0.10 | 0.27/0.10 |
| Depressed Δ [%] (cladding ratio/pure silica ratio) | -0.16/-0.33 | -0.08/-0.25 |
| Cladding Δ [%] (pure silica ratio) | -0.17 | -0.17 |
| Center core diameter 2a [mm] | 12.5 | 12.5 |
| b/a | 2.5 | 3.0 |
| Aeff @ 1550 nm [µm²] | 109 | 112 |
| λcc [nm] | 1398 | 1401 |
| Dispersion @ 1550 nm [ps/nm/km] | 20.9 | 20.7 |
| Dispersion Slope [ps/nm²/km] | 0.062 | 0.062 |
| Macro-bending loss @ 1550 nm/30 mm ϕ[dB/m] | 0.18 | 0.30 |
| Transmission loss @ 1550 nm [dB/km] | 0.154 | 0.152 |

Meanwhile, when a technician observed an end face of the multicore fiber according to the working example 5 and carried out a core distinguishing test for several times, it was confirmed that the cores could be distinguished with little to no trouble and with the accuracy rate of 99.2%.

### (Working example 6)

A multicore fiber according to a working example 6 was manufactured. The structural parameters and the optical properties according to the working example 6 are given in Table 7. The multicore fiber according to the working example 6 is a trench-type two-core fiber as explained in the third embodiment. Herein, the cores #1 and #2 are set to have the same center core Δ and the same center core diameter 2a. Moreover, the center cores were designed to have the effective core area to be approximately equal to 80 µm². Moreover, the ratio (c/a) of the outer diameter with respect to the center core diameter in the core #2 was set to be greater than the ratio in the core #1 by 10% or more. As illustrated in Table 7, the cores #1 and #2 had the substantially same optical properties such as the effective core area, the dispersion, the dispersion slope, the transmission loss, the cutoff wavelength, and the macro-bending loss. Moreover, it was confirmed that the light having the cutoff wavelength to be equal to or smaller than 1530 nm and having the wavelength in the 1.55 µm range was propagatable in the single mode.

**Table 7**

| | Core #1 | Core #2 |
|---|---|---|
| Center core Δ [%] (cladding ratio/pure silica ratio) | 0.37/0.11 | 0.37/0.11 |
| Trench Δ [%] (cladding ratio/pure silica ratio) | -0.23/-0.49 | -0.11/-0.37 |
| Cladding Δ [%] (pure silica ratio) | -0.26 | -0.26 |
| Center core diameter 2a [mm] | 9.3 | 9.3 |
| b/a | 1.5 | 1.5 |
| c/a | 2.2 | 2.6 |
| Aeff @ 1550 nm [µm²] | 79 | 80 |
| λcc [nm] | 1401 | 1404 |
| Dispersion @ 1550 nm [ps/nm/km] | 17.3 | 17.2 |
| Dispersion Slope [ps/nm²/km] | 0.062 | 0.061 |
| Bending loss @ 1550 nm/30 mm ϕ[dB/m] | 0.03 | 0.02 |
| Transmission loss @ 1550 nm [dB/km] | 0.159 | 0.157 |

Meanwhile, when a technician observed an end face of the multicore fiber according to the working example 6 and carried out a core distinguishing test for several times, it was confirmed that the cores could be distinguished with little to no trouble and with the accuracy rate of 99.1%.

Meanwhile, in the embodiments described above, a plurality of center cores has the same center core Δ and the same center core diameter. However, alternatively, as long as the absolute value of the difference in the center cores Δ is 10% or less of the smaller center core Δ and as long as the absolute value of the difference in the center core diameters is 10% or less of the smaller center core diameter, it is a desirable situation because the optical properties such as the effective core area, the dispersion, the dispersion slope, and the transmission loss become substantially equal and the absolute values of the corresponding differences become 10% or less of the corresponding smaller values.

Moreover, in the embodiments described above, although the number of center cores is equal to two, four, or seven; there is no particular restriction on the number of center cores. For example, the number of center cores is equal to or greater than two and equal to or smaller than 19. Furthermore, in the embodiments described above, although the center cores are disposed to have two-fold rotational symmetry, four-fold rotational symmetry, or six-fold rotational symmetry with respect to the central axis of the cladding portion; there is no particular restriction on the rotational symmetry. Thus, when n represents an arbitrary integer equal to or greater than two, the center cores can be disposed to have n-fold rotational symmetry.

Meanwhile, in the case of the trench-type refractive index profile, the center core Δ can be equal to or greater than 0.12% and equal to or smaller than 0.75%. The relative-refractive index difference Δ2 of the average refractive index of the intermediate layer with respect to the average refractive index of the cladding portion can be equal to or larger than -0.25% and equal to or smaller than 0.25%. The trench Δ can be equal to or greater than -1.5% and equal to or smaller than -0.05%. The ratio (b/a) of the outer diameter of the intermediate layer with respect to the center core diameter 2a can be equal to or greater than 1.2 and equal to or smaller than 4.5. The ratio (c/a) of the outer diameter 2c of the trench layer with respect to the center core diameter 2a can be equal to or greater than 1.5 and equal to or smaller than 8.0. The center core diameter 2a can be equal to or greater than 6.0 µ and equal to or smaller than 27.0 µm.

In the case of the W-type refractive index profile, the center core Δ can be equal to or greater than 0.11% and equal to or smaller than 0.82%. The depressed Δ can be equal to or greater than -1.2% and equal to or smaller -0.02%. The ratio (b/a) of the outer diameter of the depressed layer with respect to the center core diameter can be equal to or greater than 1.3 and equal to or smaller than 7.5. The center core diameter 2a can be equal to or greater than 7.0 µm and equal to or smaller than 35.0 µm.

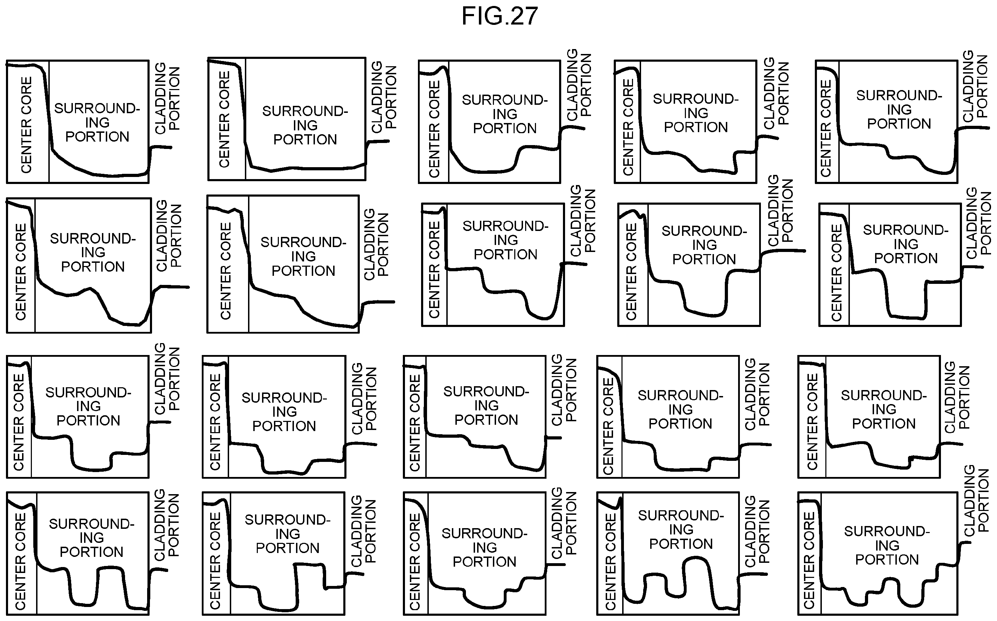

Meanwhile, as long as the cores are distinguishable, the low-refractive-layers such as the trench layers or the depressed layers can be provided in a two-layer structure, or a three-layer structure, or a multilayer structure having more than three layers. FIG. 27 is a diagram illustrating an example of 20 refractive index profiles in a multicore fiber according to the present invention. Herein, a "surrounding portion" implies the portion that encloses the center core and that includes the intermediate layers and the low-refractive-index layers.

Meanwhile, although the invention has been described with respect to specific embodiments for a complete and clear disclosure, the appended claims are to be construed as embodying all modifications and alternative constructions that may occur to one skilled in the art that fairly fall within the basic teaching herein set forth.

### Industrial Applicability

The present invention can be used in a multicore fiber.

### Reference Signs List

100, 100A, 100B, 100C, 100D, 100E, 100F, 100G, 100H, 100I, 100J, 100K, 100L, 100M multicore fiber
111, 112, 113, 114, 115, 116, 117 center core
121, 122, 123, 124, 125, 126, 127 intermediate layer
131, 132, 132A, 132B, 133, 133E, 133G, 133H, 133I, 133K,
134, 134E, 134G, 134K, 135, 136, 137 trench layer
140 cladding portion
151, 152 depressed layer
P111, P112, P121, P122, P131, P132, P132A, P132B, P140,
P151, P152 profile

## Claims

1. A multicore fiber comprising:
a plurality of center cores;
a plurality of low-refractive-index layers each of which encloses outer periphery of one of the center cores; and
a cladding portion that encloses the plurality of low-refractive-index layers, wherein
maximum refractive index of the center cores is greater than average refractive index of the cladding portion,
minimum refractive index of the low-refractive-index layers is smaller than average refractive index of the cladding portion,
among the plurality of center cores, absolute value of difference in relative refractive-index differences of maximum refractive indexes of the center cores with respect to average refractive index of the cladding portion is equal to or smaller than 10%, and absolute value of difference in center core diameters is equal to or smaller than 10%, and
regarding two low-refractive-index layers from among the plurality of low-refractive-index layers, absolute value of difference in relative refractive-index differences of minimum refractive indexes of the two low-refractive-index layers with respect to average refractive index of the cladding portion is equal to or greater than 10%, or absolute value of difference in ratios of outer diameters with respect to the center core diameters is equal to or greater than 10%.

2. The multicore fiber according to claim 1, wherein, among the plurality of center cores, absolute value of difference in effective core areas is equal to or smaller than 10%.

3. The multicore fiber according to claim 1, wherein
the plurality of center cores include a first center core and a second center core,
the plurality of low-refractive-index layers include
a first low-refractive-index layer that encloses outer periphery of the first center core, and
a second low-refractive-index layer that encloses outer periphery of the second center core,
ratio of outer diameter of the second low-refractive-index layer with respect to center core diameter of the second center core is greater by 10% or more than ratio of outer diameter of the first low-refractive-index layer with respect to center core diameter of the first center core, and
absolute value of relative refractive-index difference of minimum refractive index of the second low-refractive-index layer with respect to average refractive index of the cladding portion is smaller than absolute value of relative refractive-index difference of minimum refractive index of the first low-refractive-index layer with respect to average refractive index of the cladding portion.

4. The multicore fiber according to claim 3, wherein, among the plurality of center cores, absolute value of difference in effective core areas as well as absolute value of difference in cutoff wavelengths is equal to or smaller than 6%.

5. The multicore fiber according to claim 1, wherein, a marker that has a different refractive index than refractive index of the cladding portion and that does not contribute in optical propagation is not present inside the cladding portion.

6. The multicore fiber according to claim 1, wherein at least some portion of the low-refractive-index layers is made of silica glass containing fluorine.

7. The multicore fiber according to claim 1, wherein the center core is made of silica glass containing at least either germanium, or fluorine, or chlorine, or potassium, or sodium.

8. The multicore fiber according to claim 1, wherein the center cores propagate light, which is input thereto, in single mode and, at wavelength of the light, have effective core areas to be equal to or greater than 60 µm² and 180 µm².

9. The multicore fiber according to claim 1, wherein a number of the plurality of center cores is equal to or greater than two and equal to or smaller than 19.

10. The multicore fiber according to claim 1, wherein the plurality of center cores have rotational symmetry with respect to central axis the cladding portion.
